# EUROPÄISCHE PATENTSCHRIFT

(11) **EP 3 945 770 B1**
(45) Veröffentlichungstag und Bekanntmachung des Hinweises auf die Patenterteilung: **18.12.2024**
(21) Anmeldenummer: 20713635.9
(22) Anmeldetag: 24.03.2020
(51) Int. Cl.: A01D 34/37, A01D 34/58, A01D 34/78, H01H 3/32, A01D 34/10, A01D 34/47, A01D 34/68, A01D 34/90

(54) **WERKZEUGMASCHINENSCHALTVORRICHTUNG**
MACHINE TOOL SWITCHGEAR
DISPOSITIF DE COMMUTATION DE MACHINE-OUTIL

(30) Priorität: 27.03.2019 DE 102019204271
(43) Veröffentlichungstag der Anmeldung: 09.02.2022
(73) Patentinhaber: Robert Bosch GmbH, 70442 Stuttgart (DE)
(72) Erfinder: KONCSIK, Tamas, 3793 Sajoecseg (HU); DAVEY, Glenn, Needham Market Suffolk IP68EE (GB); LING, Matthew, Stowmarket Suffolk IP14 5BB (GB)
(86) Internationale Anmeldenummer: PCT/EP2020/058094
(87) Internationale Veröffentlichungsnummer: WO 2020/193514

(56) Entgegenhaltungen:
- EP-A1- 1 564 424
- EP-A1- 2 037 475
- EP-A1- 2 875 709
- GB-A- 2 216 721

## Beschreibung

### Stand der Technik

In der EP 2 875 709 A1 sowie in der GB 2 216 721 A ist bereits jeweils eine Werkzeugmaschinenschaltvorrichtung, insbesondere für schiebbare Gartengeräte, zu einer elektronischen Steuerung von zumindest einer elektrischen Antriebseinheit zumindest einer Werkzeugmaschine, mit zumindest einer mechanischen Betätigungseinheit und mit zumindest einer Elektronikeinheit, die zu einer Ausgabe von zumindest einem Signal, insbesondere von zumindest einem Steuersignal, in Abhängigkeit von einer Betätigung durch die Betätigungseinheit eingerichtet ist, vorgeschlagen worden, wobei zumindest eine mit der Betätigungseinheit wirkverbundene Übersetzungseinheit, die zu einer, insbesondere mechanischen, Einstellung eines Verhältnisses zwischen einem Betätigungsweg der Betätigungseinheit und einem Schaltweg der Betätigungseinheit vorgesehen ist.

### Offenbarung der Erfindung

Die Erfindung geht aus von einer Werkzeugmaschinenschaltvorrichtung, insbesondere für schiebbare Gartengeräte, zu einer elektronischen Steuerung von zumindest einer elektrischen Antriebseinheit zumindest einer Werkzeugmaschine, mit zumindest einer mechanischen Betätigungseinheit, mit zumindest einer Elektronikeinheit, die zu einer Ausgabe von zumindest einem Signal, insbesondere von zumindest einem Steuersignal, in Abhängigkeit von einer Betätigung durch die Betätigungseinheit eingerichtet ist, und mit zumindest einer mit der Betätigungseinheit wirkverbundenen Übersetzungseinheit, die zu einer, insbesondere mechanischen, Einstellung eines Verhältnisses zwischen einem Betätigungsweg der Betätigungseinheit und einem Schaltweg der Betätigungseinheit vorgesehen ist.

Es wird vorgeschlagen, dass die Übersetzungseinheit zumindest zwei Druck- und/oder Zugelemente umfasst, wobei zumindest ein erstes Druck- und/oder Zugelement als eine Zugfeder und zumindest ein zweites Druck- und/oder Zugelement als eine Druckfeder ausgebildet ist.

Die Werkzeugmaschine ist vorzugsweise als eine umgerüstete Werkzeugmaschine ausgebildet. Insbesondere weist die Werkzeugmaschine zumindest eine elektrische Antriebseinheit, die insbesondere einen Elektromotor umfasst, auf, die zumindest eine ursprünglich in der Werkzeugmaschine vorhandene Antriebseinheit mit einem Verbrennungsmotor ersetzt. Vorzugsweise ist die Werkzeugmaschine als ein, insbesondere schiebbares, Gartengerät, insbesondere als ein Rasenmäher, ausgebildet. Die Werkzeugmaschine kann insbesondere auch als eine motorisierte Heckenschere, als ein Hochentaster, als eine Kettensäge, als eine von einem Gartengerät verschiedene Werkzeugmaschine, insbesondere als eine Handwerkzeugmaschine, beispielhaft als eine Stichsäge, als eine Kreissäge, als eine Bohrmaschine o. dgl., oder als eine andere, einem Fachmann als sinnvoll erscheinende Werkzeugmaschine ausgebildet sein. Bevorzugt ist die Werkzeugmaschinenschaltvorrichtung zu einer elektronischen Steuerung von zumindest einer elektrischen Antriebseinheit der Werkzeugmaschine eingerichtet, die zu einem Antrieb von zumindest einer Bearbeitungseinheit der Werkzeugmaschine, beispielsweise von einem Mähwerk, von einer Sägekette, von einem Schermesser o. dgl., vorgesehen ist. Alternativ oder zusätzlich ist denkbar, dass die Werkzeugmaschinenschaltvorrichtung zu einer elektronischen Steuerung von zumindest einer weiteren elektrischen Antriebseinheit der Werkzeugmaschine eingerichtet ist, die zu einem Antrieb von zumindest einer Fortbewegungseinheit der Werkzeugmaschine, beispielsweise von Antriebsrädern einer als ein Rasenmäher ausgebildeten Werkzeugmaschine, vorgesehen ist. Unter "vorgesehen" soll insbesondere speziell ausgestattet und/oder speziell eingerichtet verstanden werden. Unter "eingerichtet" soll insbesondere speziell programmiert und/oder speziell ausgelegt verstanden werden. Darunter, dass ein Objekt zu einer bestimmten Funktion vorgesehen oder eingerichtet ist, soll insbesondere verstanden werden, dass das Objekt diese bestimmte Funktion in zumindest einem Anwendungs- und/oder Betriebszustand erfüllt und/oder ausführt.

Die Werkzeugmaschinenschaltvorrichtung, insbesondere eine Gehäuseeinheit der Werkzeugmaschinenschaltvorrichtung, ist vorzugsweise als eine Box, als ein Kasten o. dgl. ausgebildet. Vorzugsweise ist die Werkzeugmaschinenschaltvorrichtung, insbesondere die Gehäuseeinheit, an der Werkzeugmaschine befestigbar, insbesondere durch einen Benutzer der Werkzeugmaschine oder der Werkzeugmaschinenschaltvorrichtung. Bevorzugt ist die Werkzeugmaschinenschaltvorrichtung, insbesondere die Gehäuseeinheit, werkzeuglos an der Werkzeugmaschine befestigbar. Die Werkzeugmaschine weist vorzugsweise zumindest ein Bedienelement, beispielsweise einen Bedienbügel, einen Bedienhebel, einen Bedienschalter o. dgl. auf, das zu einer Betätigung der ursprünglich in der Werkzeugmaschine vorhandenen Antriebseinheit mit einem Verbrennungsmotor vorgesehen war. Bevorzugt weist das Bedienelement zumindest zwei unterschiedliche Stellungen auf, zwischen denen das Bedienelement um eine gewisse Wegstrecke bewegbar, beispielsweise verschiebbar, schwenkbar o. dgl., ist. Vorzugsweise ist die Betätigungseinheit, insbesondere zumindest ein Betätigungselement der Betätigungseinheit, mit dem Bedienelement koppelbar. Das Betätigungselement ist vorzugsweise als ein Betätigungskabel, als ein Betätigungsdraht o. dgl. ausgebildet. Vorzugsweise wird in Abhängigkeit von einer Betätigung des Bedienelements der Werkzeugmaschine das mit dem Bedienelement gekoppelte Betätigungselement betätigt, insbesondere an dem Betätigungselement gezogen. Vorzugsweise ist das Betätigungselement mit zumindest einem weiteren Element, insbesondere mit einem Schieberelement, der Betätigungseinheit wirkverbunden, das insbesondere dazu vorgesehen ist, die Elektronikeinheit zu betätigen. Alternativ ist denkbar, dass das Betätigungselement dazu vorgesehen ist, die Elektronikeinheit zu betätigen. Unter einer "Elektronikeinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden.

Die Elektronikeinheit weist vorzugsweise zumindest ein Schaltelement, wie beispielsweise einen Mikroschalter, ein Potentiometer, ein Relais o. dgl., auf. Bevorzugt ist die Betätigungseinheit, insbesondere das Schieberelement, dazu vorgesehen, in Abhängigkeit von einer Betätigung des Bedienelements das Schaltelement der Elektronikeinheit zu betätigen. Beispielhaft ist denkbar, dass in Abhängigkeit von einer Betätigung des Bedienelements das Betätigungselement verschoben wird, das insbesondere das Schieberelement verschiebt, das in Abhängigkeit von der Verschiebung das Schaltelement der Elektronikeinheit betätigt. Vorzugsweise weist das Schaltelement, insbesondere ein als Mikroschalter ausgebildetes Schaltelement, zumindest zwei Schaltstellungen auf, wobei in einer ersten Schaltstellung ein Signal zu einer Deaktivierung der elektrischen Antriebseinheit und in einer zweiten Schaltstellung ein Signal zu einer Aktivierung der elektrischen Antriebseinheit ausgegeben wird. Alternativ ist denkbar, dass das Schaltelement, insbesondere ein als Potentiometer ausgebildetes Schaltelement, eine Mehrzahl von Schaltstellungen, insbesondere eine kontinuierlich veränderliche Schaltstellung, aufweist, wobei beispielsweise in Abhängigkeit von unterschiedlichen Schaltstellungen unterschiedliche Signale zu einer Einstellung von unterschiedlichen Drehzahlen der elektrischen Antriebseinheit ausgegeben werden. Die Elektronikeinheit kann insbesondere eine Mehrzahl von Schaltelementen, insbesondere entsprechend einer Anzahl von Betätigungseinheiten der Werkzeugmaschinenschaltvorrichtung, aufweisen. Vorzugsweise weist die Elektronikeinheit zumindest eine Platine auf, auf der das zumindest eine Schaltelement angeordnet ist. Bevorzugt umfasst die Elektronikeinheit zumindest ein Signalleitungselement, insbesondere ein Kabel, das insbesondere elektrisch mit der elektrischen Antriebseinheit verbindbar ist. Vorzugsweise ist die Elektronikeinheit dazu eingerichtet, die Signale über das Signalleitungselement an die elektrische Antriebseinheit auszugeben.

Vorzugsweise kann die Werkzeugmaschinenschaltvorrichtung eine Mehrzahl von Übersetzungseinheiten, insbesondere eine Anzahl von Übersetzungseinheiten, entsprechend einer Anzahl von Betätigungseinheiten, aufweisen. Unter einem "Betätigungsweg der Betätigungseinheit" soll insbesondere eine maximale Wegstrecke verstanden werden, um die die Betätigungseinheit, insbesondere das Betätigungselement der Betätigungseinheit, in Abhängigkeit von einer Betätigung des Bedienelements bewegt wird. Insbesondere ist der Betätigungsweg der Betätigungseinheit abhängig von einer Wegstrecke zwischen den zumindest zwei Schaltstellungen des Bedienelements. Insbesondere kann der Betätigungsweg der Betätigungseinheit an unterschiedlichen Werkzeugmaschinen, die insbesondere unterschiedliche Wegstrecken zwischen den zumindest zwei Schaltstellungen der Bedienelemente aufweisen, unterschiedlich sein. Unter einem "Schaltweg der Betätigungseinheit" soll insbesondere eine maximale Wegstrecke verstanden werden, um die die Betätigungseinheit, insbesondere das Schieberelement der Betätigungseinheit, zwischen den zumindest zwei Schaltstellungen der Elektronikeinheit verschoben wird. Bevorzugt ist die Übersetzungseinheit dazu vorgesehen, unabhängig von dem Betätigungsweg der Betätigungseinheit, insbesondere von unterschiedlichen Bedienelementen an unterschiedlichen Werkzeugmaschinen, einen zumindest im Wesentlichen konstanten Schaltweg vorzugeben. Erfindungsgemäß ist die Übersetzungseinheit als eine mechanische Übersetzungseinheit ausgebildet, die mechanische Elemente zu einer Einstellung des Verhältnisses zwischen dem Betätigungsweg und dem Schaltweg aufweist. Dabei weist die Übersetzungseinheit zumindest eine Mehrzahl von Druck- und/oder Zugelementen, auf, das/die mit der Betätigungseinheit, insbesondere mit dem Betätigungselement und/oder mit dem Schieberelement wirkverbunden ist/sind. Das zumindest eine Druck- und/oder Zugelement, insbesondere eine Feder, ein Druckzylinder o. dgl., ist insbesondere dazu vorgesehen, das Betätigungselement und/oder das Schieberelement mit einer Druckkraft und/oder einer Zugkraft zu beaufschlagen. Zusätzlich ist denkbar, dass die mechanische Übersetzungseinheit Zahnräder, ein Seilzugsystem o. dgl. zur Einstellung des Verhältnisses zwischen dem Betätigungsweg und dem Schaltweg aufweist. Als nicht erfindungsgemäße Alternative ist vorstellbar, dass die Übersetzungseinheit als eine zumindest teilweise elektrische, insbesondere als eine elektromechanische, Übersetzungseinheit, insbesondere mit zumindest einem Stellantrieb zur Einstellung des Verhältnisses zwischen dem Betätigungsweg und dem Schaltweg, als eine hydraulische Übersetzungseinheit, insbesondere mit zumindest einem Hydraulikzylinder zur Einstellung des Verhältnisses zwischen dem Betätigungsweg und dem Schaltweg, oder als eine pneumatische Übersetzungseinheit, insbesondere mit zumindest einem Pneumatikzylinder zur Einstellung des Verhältnisses zwischen dem Betätigungsweg und dem Schaltweg, ausgebildet ist.

Durch die erfindungsgemäße Ausgestaltung der Werkzeugmaschinenschaltvorrichtung kann vorteilhaft eine Einstellung eines Verhältnisses zwischen einem Betätigungsweg einer Betätigungseinheit und einem Schaltweg der Betätigungseinheit ermöglicht werden. Vorteilhaft kann eine kompakt ausgebildete, einfach montierbare Werkzeugmaschinenschaltvorrichtung bereitgestellt werden. Vorteilhaft kann eine Werkzeugmaschinenschaltvorrichtung bereitgestellt werden, die mit einer Vielzahl von verschiedenen Werkzeugmaschinen, die insbesondere unterschiedliche Bedienelemente, insbesondere mit unterschiedlichen Wegstrecken zwischen zumindest zwei Schaltstellungen der Bedienelemente, und/oder eine unterschiedliche Anzahl von elektrischen Antriebseinheiten aufweisen, nutzbar ist. Vorteilhaft kann eine nutzerkomfortable und multifunktionale Werkzeugmaschinenschaltvorrichtung bereitgestellt werden.

Des Weiteren wird vorgeschlagen, dass die Übersetzungseinheit dazu vorgesehen ist, einen Schaltweg der Betätigungseinheit, insbesondere bis zu einem Erreichen eines Schaltpunkts der Elektronikeinheit, bereitzustellen, der kürzer ist als der Betätigungsweg der Betätigungseinheit. Unter einem "Schaltpunkt der Elektronikeinheit" soll insbesondere ein Endpunkt des Schaltwegs verstanden werden, an dem ein, insbesondere zwei Schaltstellungen aufweisendes, Schaltelement der Elektronikeinheit von einer ersten Schaltstellung in eine zweite Schaltstellung schaltet. Der Betätigungsweg der Betätigungseinheit kann in Abhängigkeit von der Werkzeugmaschine, mit der die Werkzeugmaschinenschaltvorrichtung verwendet wird, insbesondere in Abhängigkeit von dem Bedienelement der Werkzeugmaschine, beispielsweise zumindest 5 cm, zumindest 10 cm, zumindest 20 cm oder zumindest 30 cm lang sein. Insbesondere ist die Übersetzungseinheit dazu vorgesehen, einen Schaltweg der Betätigungseinheit von höchstens 2 cm, bevorzugt von höchstens 1,5 cm, besonders bevorzugt von höchstens 1 cm und ganz besonders bevorzugt von höchstens 0,5 cm bereitzustellen. Vorteilhaft kann ein definierter Schaltweg vorgegeben werden. Vorteilhaft kann eine kompakt ausgebildete Werkzeugmaschinenschaltvorrichtung bereitgestellt werden.

Ferner wird vorgeschlagen, dass die Übersetzungseinheit zumindest eines der zumindest zwei vorher genannten Druck- und/oder Zugelemente, umfasst, das zu einer Einstellung des Schaltwegs der Betätigungseinheit und/oder zu einer Rückführung der Betätigungseinheit in eine betätigungsfreie Ausgangsstellung vorgesehen ist. Dabei ist das jeweilige Druck- und/oder Zugelement als eine Feder, also als eine Druckfeder und als eine Zugfeder, ausgebildet. Vorzugsweise ist das zumindest eine Druck- und/oder Zugelement als eine Schraubenfeder ausgebildet. Bevorzugt ist das zumindest eine Druck- und/oder Zugelement als eine Metallfeder ausgebildet. Alternativ ist denkbar, dass das zumindest eine Druck- und/oder Zugelement als eine Gummifeder, als eine Luftfeder, als eine Gasdruckfeder oder als ein anderes, einem Fachmann als sinnvoll erscheinendes Druck- und/oder Zugelement ausgebildet ist. Vorzugsweise ist das zumindest eine Druck- und/oder Zugelement mit der Betätigungseinheit, insbesondere mit dem Betätigungselement und/oder mit dem Schieberelement, wirkverbunden, insbesondere mechanisch gekoppelt. Bevorzugt weist die Übersetzungseinheit zumindest zwei Druck- und/oder Zugelemente auf, wobei zumindest eines der Druck- und/oder Zugelemente mechanisch mit dem Betätigungselement und zumindest ein weiteres der Druck- und/oder Zugelemente mechanisch mit dem Schieberelement gekoppelt ist. Insbesondere ist der Schaltweg abhängig von Parametern, insbesondere von einer Druckkraft und/oder einer Zugkraft, beispielsweise einer Federstärke, von einer Länge o. dgl., des zumindest einen Druck- und/oder Zugelements. Insbesondere ist der Schaltweg durch eine Anpassung von Parametern, insbesondere von der Druckkraft und/oder der Zugkraft, beispielsweise einer Federstärke, von einer Länge o. dgl., des zumindest einen Druck- und/oder Zugelements einstellbar. Vorzugsweise ist das zumindest eine Druck- und/oder Zugelement dazu vorgesehen, die Betätigungseinheit, insbesondere das Betätigungselement und/oder das Schieberelement, in einer, insbesondere durch das Bedienelement, betätigten Schaltstellung mit einer Rückstellkraft zu beaufschlagen. Insbesondere ist das zumindest eine Druck- und/oder Zugelement dazu vorgesehen, die Betätigungseinheit, insbesondere das Betätigungselement und/oder das Schieberelement, in Abhängigkeit von einer Lösung der Betätigung von der betätigten Schaltstellung in die betätigungsfreie Ausgangsstellung rückzuführen, insbesondere in die betätigungsfreie Ausgangstellung zu ziehen oder zu drücken. Vorteilhaft kann eine Einstellbarkeit des Schaltwegs ermöglicht werden.

Die Übersetzungseinheit umfasst die zumindest zwei Druck- und/oder Zugelemente, insbesondere die vorgenannten Druck- und/oder Zugelemente, wobei das erste Druck- und/oder Zugelement als eine Zugfeder und das zweite Druck- und/oder Zugelement als eine Druckfeder ausgebildet ist. Vorzugsweise ist das erste Druck- und/oder Zugelement unmittelbar mit dem Schieberelement wirkverbunden, insbesondere mechanisch mit dem Schieberelement gekoppelt. Vorzugsweise ist das zweite Druck- und/oder Zugelement unmittelbar mit dem Betätigungselement wirkverbunden, insbesondere mechanisch mit dem Betätigungselement gekoppelt. Bevorzugt sind das erste Druck- und/oder Zugelement und das zweite Druck- und/oder Zugelement derart angeordnet, insbesondere in der Gehäuseeinheit, dass eine Kraftrichtung, entlang derer das erste Druck- und/oder Zugelement die Betätigungseinheit, insbesondere das Schieberelement, mit einer Kraft, insbesondere mit einer Zugkraft, beaufschlagt und eine weitere Kraftrichtung, entlang derer das zweite Druck- und/oder Zugelement die Betätigungseinheit, insbesondere das Betätigungselement, mit einer Kraft, insbesondere mit einer Druckkraft, beaufschlagt, zumindest im Wesentlichen parallel zueinander verlaufen. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise zeigen die Kraftrichtung und die weitere Kraftrichtung entgegen einer Betätigungsrichtung, in die die Betätigungseinheit in Abhängigkeit von einer Betätigung, insbesondere über das Bedienelement, bewegt wird. Insbesondere verlaufen die Kraftrichtung und die weitere Kraftrichtung zumindest im Wesentlichen antiparallel zu der Betätigungsrichtung. Insbesondere ist das zweite Druck- und/oder Zugelement dazu vorgesehen, eine entgegen der Betätigungsrichtung wirkende Druckkraft auf das Betätigungselement auszuüben. Insbesondere ist das erste Druck- und/oder Zugelement dazu vorgesehen, eine entgegen der Betätigungsrichtung wirkende Zugkraft auf das Schieberelement auszuüben. Das erste Druck- und/oder Zugelement ist vorzugsweise an dem Schieberelement und an einer Wandung der Gehäuseeinheit befestigt. Insbesondere ist das erste Druck- und/oder Zugelement dazu vorgesehen, das Schieberelement in Richtung der Wandung zu ziehen. Das zweite Druck- und/oder Zugelement ist vorzugsweise an dem Schieberelement gelagert. Insbesondere ist das zweite Druck- und/oder Zugelement dazu vorgesehen, das Betätigungselement gegen das Schieberelement, insbesondere in Richtung der Wandung, zu drücken. Vorzugsweise ist über eine Anpassung von Parametern, insbesondere von einer Druckkraft und/oder einer Zugkraft, beispielsweise einer Federstärke, von einer Länge, von einer Anordnung o. dgl., der Druck- und/oder Zugelemente relativ zueinander das Verhältnis zwischen dem Betätigungsweg und dem Schaltweg einstellbar. Vorteilhaft kann eine flexibel anpassbare Übersetzungseinheit zu einer Einstellung des Verhältnisses zwischen dem Betätigungsweg und dem Schaltweg bereitgestellt werden.

Zudem wird vorgeschlagen, dass die Betätigungseinheit zumindest ein mit der Übersetzungseinheit wirkverbundenes Schieberelement, insbesondere das vorgenannte Schieberelement, zu einer Betätigung zumindest eines Schaltelements, insbesondere eines Mikroschalters, der Elektronikeinheit umfasst, wobei eine geometrische Ausbildung des Schieberelements den Schaltweg der Betätigungseinheit, insbesondere bis zu einem Erreichen eines Schaltpunkts der Elektronikeinheit, relativ zu einem maximalen Verstellweg des Schieberelements beeinflusst. Unter einem "maximalen Verstellweg des Schieberelements" soll insbesondere eine Wegstrecke verstanden werden, um die das Schieberelement maximal verschiebbar ist, insbesondere in Abhängigkeit von räumlichen Gegebenheiten innerhalb der Gehäuseeinheit. Insbesondere ist der maximale Verstellweg des Schieberelements unabhängig von dem Betätigungsweg der Betätigungseinheit. Insbesondere weist das Schieberelement denselben maximalen Verstellweg unabhängig von einer Werkzeugmaschine, mit der die Werkzeugmaschinenschaltvorrichtung verwendet wird, auf. Das Schieberelement ist vorzugsweise dazu vorgesehen, das Schaltelement der Elektronikeinheit zu betätigen. Insbesondere ist das Schieberelement dazu vorgesehen, eine Schaltzunge des Schaltelements, insbesondere quer zu der Kraftrichtung und zu der weiteren Kraftrichtung, zu bewegen. Vorzugsweise wird durch eine Bewegung der Schaltzunge zumindest ein Kontakt des, insbesondere als Mikroschalter ausgebildeten, Schaltelements geschlossen und/oder ein Widerstandswert des, insbesondere als Potentiometer ausgebildeten, Schaltelements verändert. Vorzugsweise weist das Schieberelement zumindest eine Betätigungsnase auf, die dazu vorgesehen ist, das Schaltelement zu betätigen, insbesondere die Schaltzunge des Schaltelements zu bewegen. Eine Länge des Schaltwegs, insbesondere bis zum Erreichen des Schaltpunkts, insbesondere relativ zu einer Länge des maximalen Verstellwegs des Schieberelements, ist insbesondere abhängig von einer geometrischen Ausbildung des Schieberelements, insbesondere der Betätigungsnase. Beispielhaft ist denkbar, dass ein Schieberelement, insbesondere eine Betätigungsnase, mit einer großen maximalen Erstreckung quer zu der Kraftrichtung und zu der weiteren Kraftrichtung das Schaltelement nach einem kürzeren Schaltweg, insbesondere relativ zu dem maximalen Verstellweg des Schieberelements, betätigt als ein weiteres Schieberelement, insbesondere eine weitere Betätigungsnase, mit einer geringeren maximalen Erstreckung quer zu der Kraftrichtung und zu der weiteren Kraftrichtung. Beispielhaft ist denkbar, dass ein Schieberelement, das eine Betätigungsnase entlang der Kraftrichtung und der weiteren Kraftrichtung betrachtet vor einem weiteren Schieberelement aufweist, das Schaltelement nach einem kürzeren Schaltweg, insbesondere relativ zu dem maximalen Verstellweg des Schieberelements, betätigt. Vorteilhaft kann relativ zu dem maximalen Verstellweg des Schieberelements eine Feinjustierung des Schaltwegs ermöglicht werden.

Des Weiteren wird vorgeschlagen, dass das Schieberelement und/oder die Übersetzungseinheit derart ausgebildet sind/ist, dass der Schaltweg der Betätigungseinheit, insbesondere bis zum Erreichen des Schaltpunkts der Elektronikeinheit, höchstens 30 % des maximalen Verstellwegs des Schieberelements entspricht. Insbesondere sind/ist das Schieberelement und/oder die Übersetzungseinheit derart ausgebildet, dass der Schaltweg der Betätigungseinheit, insbesondere bis zum Erreichen des Schaltpunkts der Elektronikeinheit, höchstens 30 %, bevorzugt höchstens 20 % und besonders bevorzugt höchstens 10 %, des maximalen Verstellwegs des Schieberelements entspricht. Insbesondere sind/ist das Schieberelement und/oder die Übersetzungseinheit derart ausgebildet, dass das Schieberelement spätestens nach einer Verschiebung des Schieberelements um 30 % des maximalen Verstellwegs des Schieberelements das Schaltelement der Elektronikeinheit betätigt. Es kann eine vorteilhafte Abstimmung des Schaltwegs, insbesondere des Schaltpunkts, ermöglicht werden.

Ferner wird vorgeschlagen, dass die Betätigungseinheit zumindest ein mit der Übersetzungseinheit wirkverbundenes Betätigungselement, insbesondere das vorgenannte Betätigungselement, insbesondere zumindest ein Betätigungskabel, zu einer Betätigung des Schieberelements umfasst, wobei der Schaltweg der Betätigungseinheit, insbesondere bis zum Erreichen des Schaltpunkts der Elektronikeinheit, relativ zu einem maximalen Verstellweg des Betätigungselements abhängig ist von einer Ausbildung der Übersetzungseinheit. Unter einem "maximalen Verstellweg des Betätigungselements" soll insbesondere eine Wegstrecke verstanden werden, um die das Betätigungselement maximal verschiebbar ist, insbesondere in Abhängigkeit von dem Betätigungsweg der Betätigungseinheit. Insbesondere ist der maximale Verstellweg des Betätigungselements abhängig von einem Bedienelement, insbesondere von einer Geometrie des Bedienelements, einer Werkzeugmaschine, mit der die Werkzeugmaschinenschaltvorrichtung verwendet wird. Insbesondere kann das Betätigungselement abhängig von unterschiedlichen Werkzeugmaschinen, insbesondere von unterschiedlichen Bedienelementen, unterschiedliche maximale Verstellwege aufweisen. Vorzugsweise ist der Schaltweg, insbesondere bis zum Erreichen des Schaltpunkts der Elektronikeinheit, insbesondere relativ zu dem maximalen Verstellweg des Betätigungselements, abhängig von einer Ausbildung, insbesondere von Parametern, des ersten Druck- und/oder Zugelements und des zweiten Druck- und/oder Zugelements. Beispielhaft ist denkbar, dass eine Übersetzungseinheit mit einem ersten Druck- und/oder Zugelement, das eine geringere Federstärke als ein zweites Druck- und/oder Zugelement der Übersetzungseinheit aufweist, einen kürzeren Schaltweg, insbesondere relativ zu dem maximalen Verstellweg des Betätigungselements, bereitstellt als eine weitere Übersetzungseinheit mit einem ersten Druck- und/oder Zugelement, das eine höhere Federstärke als ein zweites Druck- und/oder Zugelement der weiteren Übersetzungseinheit aufweist. Vorteilhaft kann relativ zu dem maximalen Verstellweg des Betätigungselements eine Feinjustierung des Schaltwegs ermöglicht werden.

Weiterhin wird vorgeschlagen, dass die Übersetzungseinheit derart ausgebildet ist, dass der Schaltweg der Betätigungseinheit, insbesondere bis zum Erreichen des Schaltpunkts der Elektronikeinheit, höchstens 15 % des maximalen Verstellwegs des Betätigungselements entspricht. Insbesondere ist die Übersetzungseinheit derart ausgebildet, dass der Schaltweg der Betätigungseinheit, insbesondere bis zum Erreichen des Schaltpunkts der Elektronikeinheit, höchstens 15 %, bevorzugt höchstens 10 % und besonders bevorzugt höchstens 5 %, des maximalen Verstellwegs des Betätigungselements entspricht. Insbesondere ist die Übersetzungseinheit derart ausgebildet, dass die Betätigungseinheit, insbesondere das Schieberelement, spätestens nach einer Verschiebung des Betätigungselements um 15 % des maximalen Verstellwegs des Betätigungselements das Schaltelement der Elektronikeinheit betätigt. Es kann eine vorteilhafte Abstimmung des Schaltwegs, insbesondere des Schaltpunkts, ermöglicht werden.

Zudem wird vorgeschlagen, dass die Werkzeugmaschinenschaltvorrichtung zumindest eine Gehäuseeinheit, insbesondere die vorgenannte Gehäuseeinheit, umfasst, die zumindest einen Aufnahmebereich, insbesondere zumindest einen Aufnahmekanal, aufweist, in dem die Übersetzungseinheit und/oder die Betätigungseinheit anordenbar sind/ist. Die Gehäuseeinheit ist in einem montierten Zustand vorzugsweise kastenartig ausgebildet. Bevorzugt ist die Gehäuseeinheit aus einem Kunststoff ausgebildet. Alternativ ist denkbar, dass die Gehäuseeinheit aus einem Verbundwerkstoff, aus einem Metall oder aus einem anderen, einem Fachmann als sinnvoll erscheinenden Material ausgebildet ist. Vorzugsweise sind die Übersetzungseinheit, die Betätigungseinheit und/oder die Elektronikeinheit zumindest teilweise innerhalb der Gehäuseeinheit, insbesondere in zumindest einem Aufnahmeabschnitt der Gehäuseeinheit, angeordnet. Bevorzugt weist die Gehäuseeinheit zumindest einen getrennt von dem Aufnahmeabschnitt angeordneten Befestigungsabschnitt auf, der zu einer Befestigung an einer Werkzeugmaschine vorgesehen ist. Vorzugsweise erstreckt sich in einem an der Werkzeugmaschine befestigten Zustand der Gehäuseeinheit zumindest ein Bauteil, insbesondere eine Stange, der Werkzeugmaschine durch den Befestigungsabschnitt. Insbesondere weist die Gehäuseeinheit zumindest zwei, bevorzugt zumindest drei und besonders bevorzugt zumindest vier Gehäuseteile auf, die insbesondere mittels Fixierelementen, insbesondere mittels Schrauben, der Werkzeugmaschinenschaltvorrichtung aneinander fixiert sind.

Vorzugsweise kann die Gehäuseeinheit eine Mehrzahl von Aufnahmebereichen, insbesondere eine Anzahl von Aufnahmebereichen entsprechend einer Anzahl von Betätigungselementen, aufweisen. Der zumindest eine Aufnahmebereich ist vorzugsweise durch Rippenelemente zumindest eines Gehäuseteils der Gehäuseeinheit begrenzt. Vorzugsweise ist der zumindest eine Aufnahmebereich zu einer zumindest vollständigen Aufnahme des ersten Druck- und/oder Zugelements, des zweiten Druck- und/oder Zugelements und des Schieberelements vorgesehen. Insbesondere ist der zumindest eine Aufnahmebereich passgenau zu einer Aufnahme des ersten Druck- und/oder Zugelements, des zweiten Druck- und/oder Zugelements und des Schieberelements ausgebildet. Vorzugsweise ist der zumindest eine Aufnahmebereich zu einer zumindest abschnittsweisen Aufnahme des Betätigungselements vorgesehen. Insbesondere erstreckt sich das Betätigungselement abschnittsweise innerhalb des zumindest einen Aufnahmebereichs und abschnittsweise außerhalb des zumindest einen Aufnahmebereichs, insbesondere außerhalb der Gehäuseeinheit. Insbesondere weist die Gehäuseeinheit, insbesondere zumindest ein Gehäuseteil der Gehäuseeinheit, zumindest eine Durchführung auf, durch die sich das Betätigungselement aus der Gehäuseeinheit, insbesondere aus dem Aufnahmebereich, heraus erstrecken kann. Vorzugsweise sind das erste Druck- und/oder Zugelement, das zweite Druck- und/oder Zugelement und das Schieberelement in einem montierten Zustand der Gehäuseeinheit in Richtungen quer zu der Kraftrichtung und zu der weiteren Kraftrichtung zumindest im Wesentlichen spielfrei in dem zumindest einen Aufnahmebereich angeordnet. Vorteilhaft kann eine platzsparende Anordnung der Übersetzungseinheit und zumindest eines Teils der Betätigungseinheit ermöglicht werden. Vorteilhaft kann eine kompakt ausgebildete Werkzeugmaschinenschaltvorrichtung bereitgestellt werden.

Des Weiteren wird vorgeschlagen, dass der zumindest eine Aufnahmebereich zu einer Durchführung von zumindest einem weiteren Betätigungselement der Betätigungseinheit frei von einer Wirkverbindung mit der Elektronikeinheit, und insbesondere übersetzungsfrei, durch die komplette Gehäuseeinheit vorgesehen ist. Das weitere Betätigungselement kann vorzugsweise hinsichtlich einer Formgebung, einer Materialzusammensetzung o. dgl. zumindest im Wesentlichen analog zu dem Betätigungselement ausgebildet sein. Vorzugsweise ist das weitere Betätigungselement länger als das Betätigungselement ausgebildet. Vorzugsweise erstreckt sich das weitere Betätigungselement in einem montierten Zustand von einem Bedienelement einer Werkzeugmaschine, mit der die Werkzeugmaschinenschaltvorrichtung verwendet wird, bis zu einer Antriebseinheit, insbesondere mit einem Verbrennungsmotor, die über das weitere Betätigungselement ansteuerbar ist. Insbesondere ist das weitere Betätigungselement zu einer mechanischen Betätigung der, insbesondere verschieden von einer elektrischen Antriebseinheit ausgebildeten, Antriebseinheit vorgesehen. Die Antriebseinheit kann insbesondere zu einem Antrieb einer Fortbewegungseinheit der Werkzeugmaschine vorgesehen sein. Beispielsweise ist denkbar, dass die Antriebseinheit zu einem Antrieb der Fortbewegungseinheit eine Riemenscheibe aufweist und dass das weitere Betätigungselement dazu vorgesehen ist, einen Durchmesser der Riemenscheibe zu verstellen. Vorzugsweise weist die Gehäuseeinheit, insbesondere das zumindest eine Gehäuseteil der Gehäuseeinheit, zumindest eine weitere Durchführung auf, durch die sich das weitere Betätigungselement erstrecken kann. Vorzugsweise sind die Durchführung und die weitere Durchführung an zwei voneinander abgewandten Wandungen der Gehäuseeinheit, insbesondere des zumindest einen Gehäuseteils, angeordnet. Vorzugsweise ist der zumindest eine Aufnahmebereich zu einer Durchführung des weiteren Betätigungselements frei von einem Schieberelement, einem ersten Druck- und/oder Zugelement und einem zweiten Druck- und/oder Zugelement ausgebildet. Vorzugsweise ist der zumindest eine Aufnahmebereich zu einer wechselweisen Aufnahme des weiteren Betätigungselements oder der Übersetzungseinheit und der Betätigungseinheit vorgesehen. Vorteilhaft kann eine modulare Werkzeugmaschinenschaltvorrichtung bereitgestellt werden, die vorteilhaft eine nutzerkomfortable Nutzung mit unterschiedlichen Antriebseinheiten ermöglicht.

Ferner wird vorgeschlagen, dass die Gehäuseeinheit zumindest eine Öffnung zu dem zumindest einen Aufnahmebereich begrenzt, die ein Einführen von dem zumindest einen weiteren Betätigungselement der Betätigungseinheit in den zumindest einen Aufnahmebereich in einem geschlossenen Zustand der Gehäuseeinheit ermöglicht. Unter einem "geschlossenen Zustand der Gehäuseeinheit" soll insbesondere ein Zustand der Gehäuseeinheit verstanden werden, in dem die zumindest zwei Gehäuseteile der Gehäuseeinheit, die den Aufnahmeabschnitt bilden, aneinander fixiert sind. Vorzugsweise ist der geschlossene Zustand der Gehäuseeinheit verschieden von einem an der Werkzeugmaschine montierten Zustand der Gehäuseeinheit. Insbesondere ist die Öffnung in dem an der Werkzeugmaschine montierten Zustand der Gehäuseeinheit von zumindest einem Fixiergehäuseteil der Gehäuseeinheit verschlossen. Vorzugsweise erstreckt sich die Öffnung quer zu einer Haupterstreckungsrichtung des zumindest einen Aufnahmebereichs in den zumindest einen Aufnahmebereich hinein. Unter einer "Haupterstreckungsrichtung" eines Objekts soll insbesondere eine Richtung verstanden werden, welche parallel zu einer längsten Kante eines kleinsten geometrischen Quaders verläuft, welcher das Objekt gerade noch vollständig umschließt. Vorzugsweise kann die Gehäuseeinheit zumindest ein an, insbesondere in, der Öffnung angeordnetes Umlenkelement aufweisen, an dem das weitere Betätigungselement anliegen kann. Alternativ oder zusätzlich ist denkbar, dass die Gehäuseeinheit zumindest ein an, insbesondere in, der Öffnung angeordnetes Dämpfungselement, beispielhaft aus einem Gummi, aufweist, das zu einer Vibrationsdämpfung des durch die Gehäuseeinheit verlaufenden weiteren Betätigungselements vorgesehen ist, insbesondere zu einer Realisierung einer Geräuschvermeidung. Vorteilhaft kann ein Montageaufwand zu einer Anpassung der Werkzeugmaschinenschaltvorrichtung an eine Werkzeugmaschine für einen Nutzer gering gehalten werden. Vorteilhaft kann eine nutzerkomfortable Werkzeugmaschinenschaltvorrichtung bereitgestellt werden.

Weiterhin wird vorgeschlagen, dass die Gehäuseeinheit zumindest abschnittsweise zumindest einen, insbesondere trichterartigen, Führungsbereich zu einer Zuführung des weiteren Betätigungselements zu der Öffnung ausbildet. Vorzugsweise wird der Führungsbereich von den zumindest zwei Gehäuseteilen, die den Aufnahmeabschnitt bilden, ausgebildet, insbesondere begrenzt. Insbesondere weisen die zumindest zwei Gehäuseteile in einem Bereich um die Öffnung eine Formgebung, die den trichterartigen Führungsbereich vorgibt, auf. Vorzugsweise läuft zumindest eines der Gehäuseteile in Richtung der Öffnung verengend zu. Insbesondere bilden die zumindest zwei Gehäuseteile den Führungsbereich, der sich in Richtung der Öffnung trichterartig verjüngt. Vorteilhaft kann eine nutzerkomfortable Einführung des weiteren Betätigungselements in die Öffnung ermöglicht werden.

Zudem wird vorgeschlagen, dass die Werkzeugmaschinenschaltvorrichtung zumindest eine Ausgabeeinheit umfasst, die zu einer, insbesondere optischen, akustischen und/oder haptischen, Ausgabe von zumindest einem Schaltzustand und/oder Ladezustand der Elektronikeinheit vorgesehen ist. Vorzugsweise ist die Ausgabeeinheit signalübertragungstechnisch, insbesondere elektrisch, mit der Elektronikeinheit verbunden. Vorzugsweise weist die Ausgabeeinheit zumindest ein Ausgabeelement auf, das insbesondere auf der Platine der Elektronikeinheit angeordnet sein kann. Insbesondere kann die Ausgabeeinheit eine Mehrzahl von Ausgabeelementen, insbesondere zumindest zwei, bevorzugt zumindest drei und besonders bevorzugt zumindest vier Ausgabeelemente aufweisen. Bevorzugt ist die Ausgabeeinheit als eine optische Ausgabeeinheit zu einer optischen Ausgabe von zumindest einem Schaltzustand und/oder Ladezustand der Elektronikeinheit vorgesehen und weist insbesondere zumindest ein als ein Leuchtelement ausgebildetes Ausgabeelement auf. Vorzugsweise ist das Ausgabeelement als eine, insbesondere mehrfarbige, Leuchtdiode (LED) ausgebildet. Alternativ ist vorstellbar, dass die optische Ausgabeeinheit zumindest ein als ein Display ausgebildetes Ausgabeelement o. dgl. aufweist. Alternativ oder zusätzlich ist denkbar, dass die Ausgabeeinheit als eine akustische und/oder haptische Ausgabeeinheit zu einer akustischen und/oder haptischen Ausgabe von zumindest einem Schaltzustand und/oder Ladezustand der Elektronikeinheit vorgesehen ist und insbesondere zumindest ein akustisches Ausgabeelement, beispielhaft einen Lautsprecher, und/oder zumindest ein haptisches Ausgabeelement, beispielhaft einen Vibrationsmotor, aufweist. Der Schaltzustand der Elektronikeinheit gibt insbesondere an, in welcher Schaltstellung sich das zumindest eine Schaltelement der Elektronikeinheit befindet. Der Ladezustand der Elektronikeinheit gibt insbesondere eine Restkapazität zumindest einer Energieversorgungsquelle der Elektronikeinheit und/oder der Werkzeugmaschine, beispielhaft eines Akkumulators, an. Vorteilhaft kann einem Nutzer in Abhängigkeit von einem Schaltvorgang komfortabel Rückmeldung über den Schaltvorgang gegeben werden.

Des Weiteren wird vorgeschlagen, dass die Werkzeugmaschinenschaltvorrichtung zumindest eine Sekundärbetätigungseinheit umfasst, wobei die Elektronikeinheit zu einer Ausgabe von dem zumindest einen Signal in Abhängigkeit von einer Betätigung durch die Betätigungseinheit und durch die Sekundärbetätigungseinheit eingerichtet ist. Die Sekundärbetätigungseinheit ist vorzugsweise zu einer Betätigung von zumindest einem zusätzlichen Schaltelement der Elektronikeinheit vorgesehen. Bevorzugt ist die Sekundärbetätigungseinheit verschieden von der Betätigungseinheit ausgebildet. Alternativ ist vorstellbar, dass die Sekundärbetätigungseinheit zumindest im Wesentlichen analog zu der Betätigungseinheit ausgebildet ist. Vorzugsweise weist die Sekundärbetätigungseinheit zumindest ein Sekundärbetätigungselement auf, das insbesondere frei von einer Kopplung mit einem Bedienelement einer Werkzeugmaschine ausgebildet ist. Insbesondere ist das Sekundärbetätigungselement unmittelbar von einem Nutzer der Werkzeugmaschinenschaltvorrichtung betätigbar. Insbesondere ist das Sekundärbetätigungselement zu einer unmittelbaren, insbesondere übersetzungsfreien, Betätigung des zusätzlichen Schaltelements vorgesehen. Das Sekundärbetätigungselement kann insbesondere als ein Druckknopf, als ein Schiebeschalter, als ein Drehschalter oder als ein anderes, einem Fachmann als sinnvoll erscheinendes Sekundärbetätigungselement ausgebildet sein. Insbesondere ist das Sekundärbetätigungselement zumindest abschnittsweise außerhalb der Gehäuseeinheit angeordnet, insbesondere zu einer Betätigung durch den Benutzer, und zumindest abschnittsweise innerhalb der Gehäuseeinheit angeordnet, insbesondere zu einer Betätigung des zusätzlichen Schaltelements. Vorzugsweise weist die Sekundärbetätigungseinheit zumindest ein Sekundärdruck- und/oder - zugelement, insbesondere eine Druckfeder, auf, das zu einer federelastischen Lagerung, insbesondere zu einer bistabilen Lagerung, des Sekundärbetätigungselement an der Gehäuseeinheit vorgesehen ist. Insbesondere kann das Sekundärbetätigungselement in zumindest einer Schaltstellung, insbesondere zumindest in der Betätigungsstellung, verrastbar sein. Bevorzugt ist die Elektronikeinheit dazu eingerichtet, in Abhängigkeit von einer Betätigung durch die Betätigungseinheit und einer, insbesondere gleichzeitigen, Betätigung durch die Sekundärbetätigungseinheit zumindest ein Signal, insbesondere zumindest ein Steuersignal zu einer Aktivierung der elektrischen Antriebseinheit, an die elektrische Antriebseinheit auszugeben. Vorteilhaft kann eine nutzerkomfortable und nutzersichere Werkzeugmaschinenschaltvorrichtung bereitgestellt werden.

Ferner geht die Erfindung aus von einer Werkzeugmaschine, insbesondere von einem schiebbaren Gartengerät, mit zumindest einer elektrischen Antriebseinheit und mit zumindest einer erfindungsgemäßen Werkzeugmaschinenschaltvorrichtung.

Es wird vorgeschlagen, dass die Werkzeugmaschinenschaltvorrichtung zu einer elektronischen Steuerung der elektrischen Antriebseinheit eingerichtet ist. Vorzugsweise ist die Werkzeugmaschine als eine zumindest teilweise von einem Verbrennungsmotor auf einen Elektromotor umgerüstete Werkzeugmaschine ausgebildet. Vorteilhaft kann eine Werkzeugmaschine mit einer elektrischen Antriebseinheit bereitgestellt werden, die nutzerkomfortabel steuerbar ist.

Die erfindungsgemäße Werkzeugmaschinenschaltvorrichtung und/oder die erfindungsgemäße Werkzeugmaschine sollen/soll hierbei nicht auf die oben beschriebene Anwendung und Ausführungsform beschränkt sein. Insbesondere können/kann die erfindungsgemäße Werkzeugmaschinenschaltvorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine mit einer erfindungsgemäßen Werkzeugmaschinenschaltvorrichtung in einer perspektivischen Darstellung,
- Fig. 2: eine Detailansicht der erfindungsgemäßen Werkzeugmaschinenschaltvorrichtung aus Fig. 1 in einem an der erfindungsgemäßen Werkzeugmaschine aus Fig. 1 montierten Zustand in einer perspektivischen Darstellung,
- Fig. 3: eine Explosionsansicht der erfindungsgemäßen Werkzeugmaschinenschaltvorrichtung aus Fig. 1 in einer perspektivischen Darstellung,
- Fig. 4: eine Elektronikeinheit der erfindungsgemäßen Werkzeugmaschinenschaltvorrichtung aus Fig. 1 in einer perspektivischen Darstellung,
- Fig. 5: die erfindungsgemäße Werkzeugmaschinenschaltvorrichtung aus Fig. 1 in einer schematischen Schnittdarstellung,
- Fig. 6: die erfindungsgemäße Werkzeugmaschinenschaltvorrichtung aus Fig. 1 in einer weiteren schematischen Schnittdarstellung,
- Fig. 7: ein Diagramm eines Schaltwegs einer Betätigungseinheit der erfindungsgemäßen Werkzeugmaschinenschaltvorrichtung aus Fig. 1 in einer schematischen Darstellung,
- Fig. 8: ein weiteres Diagramm des Schaltwegs aus Fig. 7 in einer schematischen Darstellung,
- Fig. 9: die erfindungsgemäße Werkzeugmaschinenschaltvorrichtung aus Fig. 1 in einer schematischen Darstellung und
- Fig. 10: die erfindungsgemäße Werkzeugmaschinenschaltvorrichtung aus Fig. 1 in einer weiteren schematischen Darstellung.

### Beschreibung des Ausführungsbeispiels

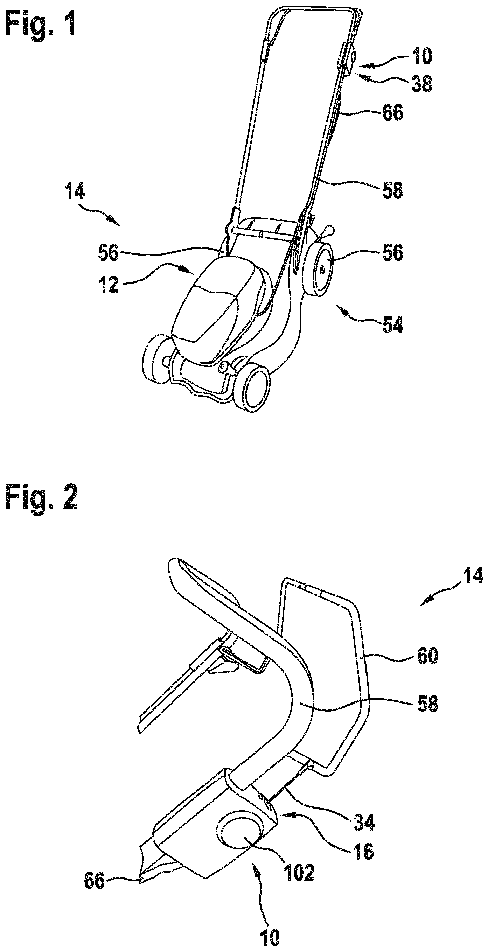

Figur 1 zeigt eine Werkzeugmaschine 14, insbesondere ein schiebbares Gartengerät, mit zumindest einer elektrischen Antriebseinheit 12 und mit zumindest einer Werkzeugmaschinenschaltvorrichtung 10, insbesondere für schiebbare Gartengeräte, in einer perspektivischen Darstellung. Die Werkzeugmaschine 14 ist vorzugsweise als eine umgerüstete Werkzeugmaschine 14 ausgebildet. Insbesondere weist die Werkzeugmaschine 14 die zumindest eine elektrische Antriebseinheit 12, die insbesondere einen Elektromotor umfasst, auf, die zumindest eine ursprünglich in der Werkzeugmaschine 14 vorhandene Antriebseinheit mit einem Verbrennungsmotor ersetzt. Vorzugsweise ist die Werkzeugmaschine 14 als ein, insbesondere schiebbares, Gartengerät, insbesondere als ein Rasenmäher, ausgebildet. Im vorliegenden Ausführungsbeispiel ist die Werkzeugmaschine 14 beispielhaft als ein Rasenmäher ausgebildet. Die Werkzeugmaschine 14 kann insbesondere auch als eine motorisierte Heckenschere, als ein Hochentaster, als eine Kettensäge, als eine von einem Gartengerät verschiedene Werkzeugmaschine, insbesondere als eine Handwerkzeugmaschine, beispielhaft als eine Stichsäge, als eine Kreissäge, als eine Bohrmaschine o. dgl., oder als eine andere, einem Fachmann als sinnvoll erscheinende Werkzeugmaschine ausgebildet sein. Die Werkzeugmaschinenschaltvorrichtung 10 ist insbesondere zu einer elektronischen Steuerung der zumindest einen elektrischen Antriebseinheit 12 der zumindest einen Werkzeugmaschine 14 eingerichtet. Bevorzugt ist die Werkzeugmaschinenschaltvorrichtung 10 zu einer elektronischen Steuerung der zumindest einen elektrischen Antriebseinheit 12 der Werkzeugmaschine 14 eingerichtet, die zu einem Antrieb von zumindest einer Bearbeitungseinheit der Werkzeugmaschine 14, beispielsweise von einem Mähwerk, von einer Sägekette, von einem Schermesser o. dgl., vorgesehen ist (hier nicht weiter dargestellt). Alternativ oder zusätzlich ist denkbar, dass die Werkzeugmaschinenschaltvorrichtung 10 zu einer elektronischen Steuerung von zumindest einer weiteren elektrischen Antriebseinheit der Werkzeugmaschine 14 eingerichtet ist, die zu einem Antrieb von zumindest einer Fortbewegungseinheit 54 der Werkzeugmaschine 14, beispielsweise von Antriebsrädern 56 der als ein Rasenmäher ausgebildeten Werkzeugmaschine 14, vorgesehen ist.

Die Werkzeugmaschinenschaltvorrichtung 10, insbesondere eine Gehäuseeinheit 38 der Werkzeugmaschinenschaltvorrichtung 10, ist vorzugsweise als eine Box, als ein Kasten o. dgl. ausgebildet. Vorzugsweise ist die Werkzeugmaschinenschaltvorrichtung 10, insbesondere die Gehäuseeinheit 38, an der Werkzeugmaschine 14 befestigbar, insbesondere durch einen Benutzer der Werkzeugmaschine 14 oder der Werkzeugmaschinenschaltvorrichtung 10. Bevorzugt ist die Werkzeugmaschinenschaltvorrichtung 10, insbesondere die Gehäuseeinheit 38, werkzeuglos an der Werkzeugmaschine 14 befestigbar. In Figur 1 ist die Werkzeugmaschinenschaltvorrichtung 10, insbesondere die Gehäuseeinheit 38, insbesondere an einem Schubbügel 58 der Werkzeugmaschine 14 befestigt.

Figur 2 zeigt eine Detailansicht der Werkzeugmaschinenschaltvorrichtung 10 aus Fig. 1 in einem an der Werkzeugmaschine 14 aus Fig. 1 montierten Zustand in einer perspektivischen Darstellung. Die Werkzeugmaschinenschaltvorrichtung 10 umfasst insbesondere zumindest eine mechanische Betätigungseinheit 16, 16' und zumindest eine Elektronikeinheit 18, die zu einer Ausgabe von zumindest einem Signal, insbesondere von zumindest einem Steuersignal, in Abhängigkeit von einer Betätigung durch die Betätigungseinheit 16, 16' eingerichtet ist. Bevorzugt umfasst die Werkzeugmaschinenschaltvorrichtung 10 zumindest eine mit der Betätigungseinheit 16, 16' wirkverbundene Übersetzungseinheit 20, 20', die zu einer, insbesondere mechanischen, Einstellung eines Verhältnisses zwischen einem Betätigungsweg der Betätigungseinheit 16, 16' und einem Schaltweg der Betätigungseinheit 16, 16' vorgesehen ist.

Die Werkzeugmaschine 14 weist vorzugsweise zumindest ein Bedienelement 60, beispielsweise einen Bedienbügel, einen Bedienhebel, einen Bedienschalter o. dgl. auf, das zu einer Betätigung der ursprünglich in der Werkzeugmaschine 14 vorhandenen Antriebseinheit mit einem Verbrennungsmotor vorgesehen war. Im vorliegenden Ausführungsbeispiel ist das Bedienelement 60 beispielhaft als ein Bedienbügel ausgebildet. Bevorzugt weist das Bedienelement 60 zumindest zwei unterschiedliche Stellungen auf, zwischen denen das Bedienelement 60 um eine gewisse Wegstrecke bewegbar, beispielsweise verschiebbar, schwenkbar o. dgl., ist. Vorzugsweise ist die Betätigungseinheit 16, 16', insbesondere zumindest ein Betätigungselement 34, 34' der Betätigungseinheit 16, 16', mit dem Bedienelement 60 koppelbar. Das Betätigungselement 34, 34' ist vorzugsweise als ein Betätigungskabel, als ein Betätigungsdraht o. dgl. ausgebildet. Vorzugsweise wird in Abhängigkeit von einer Betätigung des Bedienelements 60 der Werkzeugmaschine 14 das mit dem Bedienelement 60 gekoppelte Betätigungselement 34, 34' betätigt, insbesondere an dem Betätigungselement 34, 34' gezogen. Vorzugsweise ist das Betätigungselement 34, 34' mit zumindest einem weiteren Element, insbesondere mit einem Schieberelement 26, 26', der Betätigungseinheit 16, 16' wirkverbunden, das insbesondere dazu vorgesehen ist, die Elektronikeinheit 18 zu betätigen. Alternativ ist denkbar, dass das Betätigungselement 34, 34' dazu vorgesehen ist, die Elektronikeinheit 18 zu betätigen.

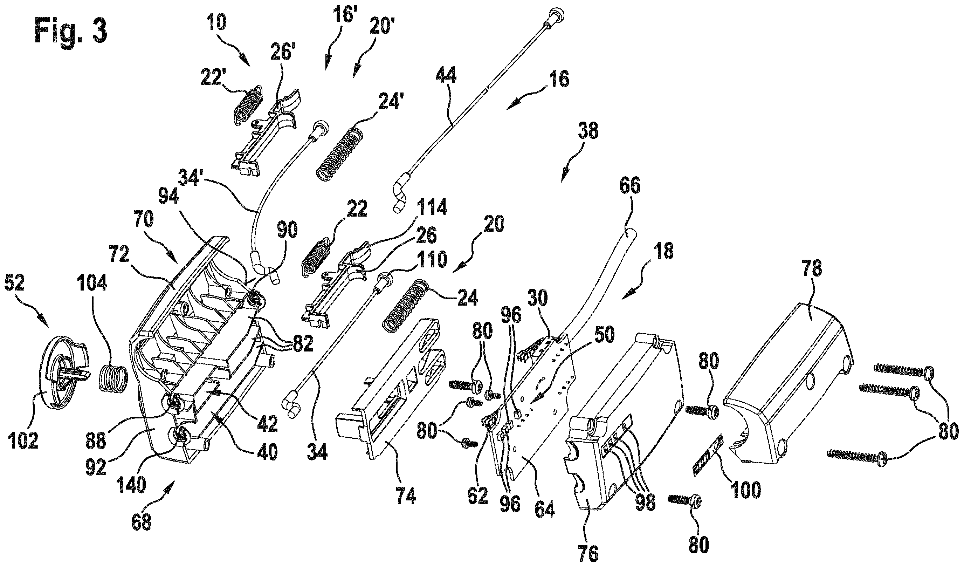

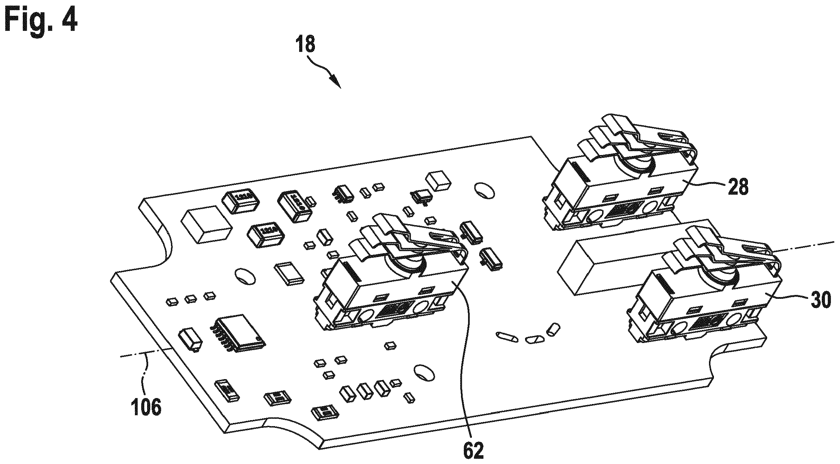

Figur 3 zeigt eine Explosionsansicht der Werkzeugmaschinenschaltvorrichtung 10 aus Fig. 1 in einer perspektivischen Darstellung. Die Elektronikeinheit 18 weist vorzugsweise zumindest ein Schaltelement 28, 30, 62, wie beispielsweise einen Mikroschalter, ein Potentiometer, ein Relais o. dgl., auf. Bevorzugt ist die Betätigungseinheit 16, 16', insbesondere das Schieberelement 26, 26', dazu vorgesehen, in Abhängigkeit von einer Betätigung des Bedienelements 60 das zumindest eine Schaltelement 28, 30 der Elektronikeinheit 18 zu betätigen. Beispielhaft ist denkbar, dass in Abhängigkeit von einer Betätigung des Bedienelements 60 das Betätigungselement 34, 34' verschoben wird, das insbesondere das Schieberelement 26, 26' verschiebt, das in Abhängigkeit von der Verschiebung das zumindest eine Schaltelement 28, 30 der Elektronikeinheit 18 betätigt. Vorzugsweise weist das zumindest eine Schaltelement 28, 30, 62, insbesondere ein als Mikroschalter ausgebildetes Schaltelement 28, 30, 62, zumindest zwei Schaltstellungen auf, wobei in einer ersten Schaltstellung ein Signal zu einer Deaktivierung der elektrischen Antriebseinheit 12 und in einer zweiten Schaltstellung ein Signal zu einer Aktivierung der elektrischen Antriebseinheit 12 ausgegeben wird. Alternativ ist denkbar, dass das zumindest eine Schaltelement 28, 30, 62, insbesondere ein als Potentiometer ausgebildetes Schaltelement, eine Mehrzahl von Schaltstellungen, insbesondere eine kontinuierlich veränderliche Schaltstellung, aufweist, wobei beispielsweise in Abhängigkeit von unterschiedlichen Schaltstellungen unterschiedliche Signale zu einer Einstellung von unterschiedlichen Drehzahlen der elektrischen Antriebseinheit 12 ausgegeben werden. Die Elektronikeinheit 18 kann insbesondere eine Mehrzahl von Schaltelementen 28, 30, 62, insbesondere entsprechend einer Anzahl von Betätigungseinheiten 16, 16' der Werkzeugmaschinenschaltvorrichtung 10, aufweisen. Im vorliegenden Ausführungsbeispiel weist die Elektronikeinheit 18 beispielhaft drei Schaltelemente 28, 30, 62 auf, die beispielhaft zumindest im Wesentlichen analog zueinander, insbesondere als Mikroschalter, ausgebildet sind (vgl. Figur 4). Im vorliegenden Ausführungsbeispiel weist die Werkzeugmaschinenschaltvorrichtung 10 beispielhaft die Betätigungseinheit 16 und eine weitere, insbesondere optionale, Betätigungseinheit 16' auf, die beispielhaft zumindest im Wesentlichen analog zueinander ausgebildet sind. Die Betätigungseinheit 16 ist insbesondere zu einer Betätigung eines Schaltelements 28 der Elektronikeinheit 18 vorgesehen. Die weitere Betätigungseinheit 16' ist zu einer Betätigung eines weiteren Schaltelements 30 der Elektronikeinheit 18 vorgesehen. Die folgende Beschreibung beschränkt sich der Übersichtlichkeit halber auf die Betätigungseinheit 16 und das Schaltelement 28. Die Beschreibung ist zumindest im Wesentlichen analog auch auf die weitere Betätigungseinheit 16' und das weitere Schaltelement 30 übertragbar. Die Elektronikeinheit 18 weist insbesondere ein zusätzliches Schaltelement 62 auf. Das zusätzliche Schaltelement 62 ist insbesondere von einer Sekundärbetätigungseinheit 52 der Werkzeugmaschinenschaltvorrichtung 10 betätigbar. Vorzugsweise weist die Elektronikeinheit 18 zumindest eine Platine 64 auf, auf der die Schaltelemente 28, 30, 62 angeordnet sind. Bevorzugt umfasst die Elektronikeinheit 18 zumindest ein Signalleitungselement 66, insbesondere ein Kabel, das insbesondere elektrisch mit der elektrischen Antriebseinheit 12 verbindbar ist. Vorzugsweise ist die Elektronikeinheit 18 dazu eingerichtet, die Signale über das Signalleitungselement 66 an die elektrische Antriebseinheit 12 auszugeben.

Vorzugsweise kann die Werkzeugmaschinenschaltvorrichtung 10 eine Mehrzahl von Übersetzungseinheiten 20, 20', insbesondere eine Anzahl von Übersetzungseinheiten 20, 20', entsprechend einer Anzahl von Betätigungseinheiten 16, 16', aufweisen. Im vorliegenden Ausführungsbeispiel weist die Werkzeugmaschinenschaltvorrichtung 10 beispielhaft eine Übersetzungseinheit 20, die der Betätigungseinheit 16 zugeordnet ist, und eine weitere, insbesondere optionale, Übersetzungseinheit 20', die der weiteren Betätigungseinheit 16' zugeordnet ist, auf. Die Übersetzungseinheit 20 und die weitere Übersetzungseinheit 20' sind insbesondere zumindest im Wesentlichen analog zueinander ausgebildet. Die folgende Beschreibung beschränkt sich der Übersichtlichkeit halber auf die Übersetzungseinheit 20. Die Beschreibung ist zumindest im Wesentlichen analog auch auf die weitere Übersetzungseinheit 20' übertragbar. Insbesondere ist der Betätigungsweg der Betätigungseinheit 16 abhängig von einer Wegstrecke zwischen den zumindest zwei Schaltstellungen des Bedienelements 60. Insbesondere kann der Betätigungsweg der Betätigungseinheit 16 an unterschiedlichen Werkzeugmaschinen 14, die insbesondere unterschiedliche Wegstrecken zwischen den zumindest zwei Schaltstellungen der Bedienelemente 60 aufweisen, unterschiedlich sein. Bevorzugt ist die Übersetzungseinheit 20 dazu vorgesehen, unabhängig von dem Betätigungsweg der Betätigungseinheit 16, insbesondere von unterschiedlichen Bedienelementen 60 an unterschiedlichen Werkzeugmaschinen 14, einen zumindest im Wesentlichen konstanten Schaltweg vorzugeben.

Erfindungsgemäß ist die Übersetzungseinheit 20 als eine mechanische Übersetzungseinheit 20 ausgebildet, die insbesondere mechanische Elemente zu einer Einstellung des Verhältnisses zwischen dem Betätigungsweg und dem Schaltweg aufweist. Dabei weist die Übersetzungseinheit 20 eine Mehrzahl von Druck- und/oder Zugelementen 22, 24, auf, das/die mit der Betätigungseinheit 16, insbesondere mit dem Betätigungselement 34 und/oder mit dem Schieberelement 26 wirkverbunden ist/sind. Das zumindest eine Druck- und/oder Zugelement 22, 24, insbesondere eine Feder, ein Druckzylinder o. dgl., ist insbesondere dazu vorgesehen, das Betätigungselement 34 und/oder das Schieberelement 26 mit einer Drucckraft und/oder einer Zugkraft zu beaufschlagen. Zusätzlich ist denkbar, dass die mechanische Übersetzungseinheit 20 Zahnräder, ein Seilzugsystem o. dgl. zur Einstellung des Verhältnisses zwischen dem Betätigungsweg und dem Schaltweg aufweist. Als nicht erfindungsgemäße Alternative ist vorstellbar, dass die Übersetzungseinheit 20 als eine zumindest teilweise elektrische, insbesondere als eine elektromechanische, Übersetzungseinheit, insbesondere mit zumindest einem Stellantrieb zur Einstellung des Verhältnisses zwischen dem Betätigungsweg und dem Schaltweg, als eine hydraulische Übersetzungseinheit, insbesondere mit zumindest einem Hydraulikzylinder zur Einstellung des Verhältnisses zwischen dem Betätigungsweg und dem Schaltweg, oder als eine pneumatische Übersetzungseinheit, insbesondere mit zumindest einem Pneumatikzylinder zur Einstellung des Verhältnisses zwischen dem Betätigungsweg und dem Schaltweg, ausgebildet ist.

Bevorzugt ist die Übersetzungseinheit 20 dazu vorgesehen, einen Schaltweg der Betätigungseinheit 16, insbesondere bis zu einem Erreichen eines Schaltpunkts der Elektronikeinheit 18, bereitzustellen, der kürzer ist als der Betätigungsweg der Betätigungseinheit 16. Der Betätigungsweg der Betätigungseinheit 16 kann in Abhängigkeit von der Werkzeugmaschine 14, mit der die Werkzeugmaschinenschaltvorrichtung 10 verwendet wird, insbesondere in Abhängigkeit von dem Bedienelement 60 der Werkzeugmaschine 14, beispielsweise zumindest 5 cm, zumindest 10 cm, zumindest 20 cm oder zumindest 30 cm lang sein. Insbesondere ist die Übersetzungseinheit 20 dazu vorgesehen, einen Schaltweg der Betätigungseinheit 16 von höchstens 2 cm, bevorzugt von höchstens 1,5 cm, besonders bevorzugt von höchstens 1 cm und ganz besonders bevorzugt von höchstens 0,5 cm bereitzustellen.

Beispielhaft umfasst die Übersetzungseinheit 20 zumindest ein Druck- und/oder Zugelement 22, 24, das zu einer Einstellung des Schaltwegs der Betätigungseinheit 16 und/oder zu einer Rückführung der Betätigungseinheit 16 in eine betätigungsfreie Ausgangsstellung vorgesehen ist. Im vorliegenden Ausführungsbeispiel weist die Übersetzungseinheit 20 erfindungsgemäß zwei Druck- und/oder Zugelemente 22, 24 auf. Dabei sind die Druck- und/oder Zugelemente 22, 24 als Federn, hier als Druckfedern und als Zugfedern, ausgebildet. Vorzugsweise sind die Druck- und/oder Zugelemente 22, 24 als Schraubenfedern ausgebildet. Bevorzugt sind die Druck- und/oder Zugelemente 22, 24 als Metallfedern ausgebildet. Alternativ ist denkbar, dass die Druck- und/oder Zugelemente 22, 24 als Gummifedern, als Luftfedern, als Gasdruckfedern oder als andere, einem Fachmann als sinnvoll erscheinende Druck- und/oder Zugelemente ausgebildet sind. Vorzugsweise sind die Druck- und/oder Zugelemente 22, 24 mit der Betätigungseinheit 16, insbesondere mit dem Betätigungselement 34 und/oder mit dem Schieberelement 26, wirkverbunden, insbesondere mechanisch gekoppelt. Bevorzugt weist die Übersetzungseinheit 20 die zumindest zwei Druck- und/oder Zugelemente 22, 24 auf, wobei zumindest ein zweites Druck- und/oder Zugelement 24 mechanisch mit dem Betätigungselement 34 und zumindest ein erstes Druck- und/oder Zugelement 22 mechanisch mit dem Schieberelement 26 gekoppelt ist. Insbesondere ist der Schaltweg abhängig von Parametern, insbesondere von einer Druckkraft und/oder einer Zugkraft, beispielsweise einer Federstärke, von einer Länge o. dgl., der Druck- und/oder Zugelemente 22, 24. Insbesondere ist der Schaltweg durch eine Anpassung von Parametern, insbesondere von der Druckkraft und/oder der Zugkraft, beispielsweise einer Federstärke, von einer Länge o. dgl., der Druck- und/oder Zugelemente 22, 24 einstellbar. Vorzugsweise sind die Druck- und/oder Zugelemente 22, 24 dazu vorgesehen, die Betätigungseinheit 16, insbesondere das Betätigungselement 34 und/oder das Schieberelement 26, in einer, insbesondere durch das Bedienelement 60, betätigten Schaltstellung mit einer Rückstellkraft zu beaufschlagen. Insbesondere sind die Druck- und/oder Zugelemente 22, 24 dazu vorgesehen, die Betätigungseinheit 16, insbesondere das Betätigungselement 34 und/oder das Schieberelement 26, in Abhängigkeit von einer Lösung der Betätigung von der betätigten Schaltstellung in die betätigungsfreie Ausgangsstellung rückzuführen, insbesondere in die betätigungsfreie Ausgangstellung zu ziehen oder zu drücken.

Bevorzugt umfasst die Werkzeugmaschinenschaltvorrichtung 10 zumindest eine Gehäuseeinheit, insbesondere die vorgenannte Gehäuseeinheit 38, die zumindest einen Aufnahmebereich 40, 42, insbesondere zumindest einen Aufnahmekanal, aufweist, in dem die Übersetzungseinheit 20, 20' und/oder die Betätigungseinheit 16, 16' anordenbar sind/ist. Vorzugsweise kann die Gehäuseeinheit 38 eine Mehrzahl von Aufnahmebereichen 40, 42, insbesondere eine Anzahl von Aufnahmebereichen 40, 42 entsprechend einer Anzahl von Betätigungselementen 34, 34', 44, aufweisen. Im vorliegenden Ausführungsbeispiel weist die Gehäuseeinheit 38 beispielhaft einen Aufnahmebereich 40 und einen weiteren Aufnahmebereich 42 auf. Der Aufnahmebereich 40 ist insbesondere zu einer Aufnahme der Betätigungseinheit 16 und der Übersetzungseinheit 20 vorgesehen. Der weitere Aufnahmebereich 42 ist insbesondere zu einer Aufnahme der weiteren Betätigungseinheit 16' und der weiteren Übersetzungseinheit 20' vorgesehen. Die Gehäuseeinheit 38 ist in einem montierten Zustand vorzugsweise kastenartig ausgebildet. Bevorzugt ist die Gehäuseeinheit 38 aus einem Kunststoff ausgebildet. Alternativ ist denkbar, dass die Gehäuseeinheit 38 aus einem Verbundwerkstoff, aus einem Metall oder aus einem anderen, einem Fachmann als sinnvoll erscheinenden Material ausgebildet ist. Vorzugsweise sind die Übersetzungseinheit 20, die Betätigungseinheit 16 und/oder die Elektronikeinheit 18 zumindest teilweise innerhalb der Gehäuseeinheit 38, insbesondere in zumindest einem Aufnahmeabschnitt 68 der Gehäuseeinheit 38, angeordnet. Bevorzugt weist die Gehäuseeinheit 38 zumindest einen getrennt von dem Aufnahmeabschnitt 68 angeordneten Befestigungsabschnitt 70 auf, der zu einer Befestigung an der Werkzeugmaschine 14 vorgesehen ist. Vorzugsweise erstreckt sich in einem an der Werkzeugmaschine 14 befestigten Zustand der Gehäuseeinheit 38 zumindest ein Bauteil, insbesondere eine Stange, im vorliegenden Ausführungsbeispiel beispielhaft der Schubbügel 58, der Werkzeugmaschine 14 durch den Befestigungsabschnitt 70 (vgl. Figur 2). Insbesondere weist die Gehäuseeinheit 38 zumindest zwei, bevorzugt zumindest drei und besonders bevorzugt zumindest vier Gehäuseteile 72, 74, 76, 78 auf, die insbesondere mittels Fixierelementen 80, insbesondere mittels Schrauben, der Werkzeugmaschinenschaltvorrichtung 10 aneinander fixiert sind. Im vorliegenden Ausführungsbeispiel weist die Gehäuseeinheit 38 beispielhaft ein erstes Gehäuseteil 72, ein zweites Gehäuseteil 74, ein drittes Gehäuseteil 76 und ein drittes Gehäuseteil 78 auf.

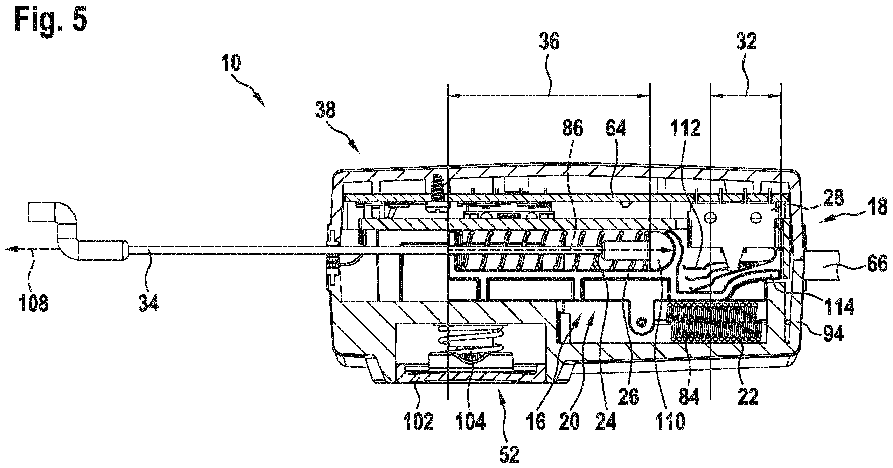

Die folgende Beschreibung beschränkt sich der Übersichtlichkeit halber auf den Aufnahmebereich 40. Die Beschreibung ist zumindest im Wesentlichen analog auch auf den weiteren Aufnahmebereich 42 übertragbar. Der Aufnahmebereich 40 ist vorzugsweise durch Rippenelemente 82 zumindest des ersten Gehäuseteils 72 der Gehäuseeinheit 38 begrenzt. Vorzugsweise ist der Aufnahmebereich 40 zu einer zumindest vollständigen Aufnahme des ersten Druck- und/oder Zugelements 22, des zweiten Druck- und/oder Zugelements 24 und des Schieberelements 26 vorgesehen. Insbesondere ist der Aufnahmebereich 40 passgenau zu einer Aufnahme des ersten Druck- und/oder Zugelements 22, des zweiten Druck- und/oder Zugelements 24 und des Schieberelements 26 ausgebildet. Vorzugsweise ist der Aufnahmebereich 40 zu einer zumindest abschnittsweisen Aufnahme des Betätigungselements 34 vorgesehen. Insbesondere erstreckt sich das Betätigungselement 34 abschnittsweise innerhalb des Aufnahmebereichs 40 und abschnittsweise außerhalb des Aufnahmebereichs 40, insbesondere außerhalb der Gehäuseeinheit 38. Insbesondere weist die Gehäuseeinheit 38, insbesondere zumindest das erste Gehäuseteil 72 der Gehäuseeinheit 38, zumindest eine Durchführung 140 auf, durch die sich das Betätigungselement 34 aus der Gehäuseeinheit 38, insbesondere aus dem Aufnahmebereich 40, heraus erstrecken kann. Vorzugsweise sind das erste Druck- und/oder Zugelement 22, das zweite Druck- und/oder Zugelement 24 und das Schieberelement 26 in einem montierten Zustand der Gehäuseeinheit 38 in Richtungen quer zu einer Kraftrichtung 84 des ersten Druck- und/oder Zugelements 22 und zu einer weiteren Kraftrichtung 86 des zweiten Druck- und/oder Zugelements 24 zumindest im Wesentlichen spielfrei in dem Aufnahmebereich 40 angeordnet (vgl. Figur 5).

Bevorzugt ist der zumindest eine Aufnahmebereich, insbesondere der weitere Aufnahmebereich 42, zu einer Durchführung von zumindest einem weiteren Betätigungselement 44 der Betätigungseinheit 16 frei von einer Wirkverbindung mit der Elektronikeinheit 18, und insbesondere übersetzungsfrei, durch die komplette Gehäuseeinheit 38 vorgesehen. Das weitere Betätigungselement 44 kann vorzugsweise hinsichtlich einer Formgebung, einer Materialzusammensetzung o. dgl. zumindest im Wesentlichen analog zu dem Betätigungselement 34 ausgebildet sein. Vorzugsweise ist das weitere Betätigungselement 44 länger als das Betätigungselement 34 ausgebildet. Vorzugsweise erstreckt sich das weitere Betätigungselement 44 in einem montierten Zustand von dem Bedienelement 60 der Werkzeugmaschine 14, mit der die Werkzeugmaschinenschaltvorrichtung 10 verwendet wird, bis zu einer Antriebseinheit, insbesondere mit einem Verbrennungsmotor, die über das weitere Betätigungselement 44 ansteuerbar ist (hier nicht weiter dargestellt). Insbesondere ist das weitere Betätigungselement 44 zu einer mechanischen Betätigung der, insbesondere verschieden von einer elektrischen Antriebseinheit 12 ausgebildeten, Antriebseinheit vorgesehen. Die Antriebseinheit kann insbesondere zu einem Antrieb der Fortbewegungseinheit 54 der Werkzeugmaschine 14 vorgesehen sein. Beispielsweise ist denkbar, dass die Antriebseinheit zu einem Antrieb der Fortbewegungseinheit 54 eine Riemenscheibe aufweist und dass das weitere Betätigungselement 44 dazu vorgesehen ist, einen Durchmesser der Riemenscheibe zu verstellen. Vorzugsweise weist die Gehäuseeinheit 38, insbesondere zumindest das erste Gehäuseteil 72 der Gehäuseeinheit 38, zumindest eine weitere Durchführung 88 und zumindest eine zusätzliche Durchführung 90 auf, durch die sich das weitere Betätigungselement 44 erstrecken kann. Vorzugsweise sind die weitere Durchführung 88 und die zusätzliche Durchführung 90 an zwei voneinander abgewandten Wandungen 92, 94 der Gehäuseeinheit 38, insbesondere des ersten Gehäuseteils 72, angeordnet. Im vorliegenden Ausführungsbeispiel ist die weitere Durchführung 88 beispielhaft an einer Wandung 92 und die zusätzliche Durchführung 90 an einer weiteren Wandung 94 angeordnet. Vorzugsweise ist der weitere Aufnahmebereich 42 zu einer Durchführung des weiteren Betätigungselements 44 frei von dem Schieberelement 26' der weiteren Betätigungseinheit 16', dem ersten Druck- und/oder Zugelement 22' und dem zweiten Druck- und/oder Zugelement 24' der weiteren Übersetzungseinheit 20' ausgebildet. Vorzugsweise ist der weitere Aufnahmebereich 42 zu einer wechselweisen Aufnahme des weiteren Betätigungselements 44 oder der weiteren Übersetzungseinheit 20' und der weiteren Betätigungseinheit 16' vorgesehen.

Bevorzugt umfasst die Werkzeugmaschinenschaltvorrichtung 10 zumindest eine Ausgabeeinheit 50, die zu einer, insbesondere optischen, akustischen und/oder haptischen, Ausgabe von zumindest einem Schaltzustand und/oder Ladezustand der Elektronikeinheit 18 vorgesehen ist. Vorzugsweise ist die Ausgabeeinheit 50 signalübertragungstechnisch, insbesondere elektrisch, mit der Elektronikeinheit 18 verbunden. Vorzugsweise weist die Ausgabeeinheit 50 zumindest ein Ausgabeelement 96 auf, das insbesondere auf der Platine 64 der Elektronikeinheit 18 angeordnet sein kann. Insbesondere kann die Ausgabeeinheit 50 eine Mehrzahl von Ausgabeelementen 96, insbesondere zumindest zwei, bevorzugt zumindest drei und besonders bevorzugt zumindest vier Ausgabeelemente 96 aufweisen. Im vorliegenden Ausführungsbeispiel weist die Ausgabeeinheit 50 beispielhaft vier Ausgabeelemente 96 auf. Bevorzugt ist die Ausgabeeinheit 50 als eine optische Ausgabeeinheit zu einer optischen Ausgabe von zumindest einem Schaltzustand und/oder Ladezustand der Elektronikeinheit 18 vorgesehen und weist insbesondere zumindest ein als ein Leuchtelement ausgebildetes Ausgabeelement 96 auf. Im vorliegenden Ausführungsbeispiel weist die Ausgabeeinheit 50 beispielhaft vier als Leuchtelemente ausgebildete Ausgabeelemente 96 auf. Vorzugsweise sind die Ausgabeelemente 96 als, insbesondere mehrfarbige, Leuchtdioden ausgebildet. Alternativ ist vorstellbar, dass die optische Ausgabeeinheit 50 zumindest ein als ein Display ausgebildetes Ausgabeelement 96 o. dgl. aufweist. Alternativ oder zusätzlich ist denkbar, dass die Ausgabeeinheit 50 als eine akustische und/oder haptische Ausgabeeinheit zu einer akustischen und/oder haptischen Ausgabe von zumindest einem Schaltzustand und/oder Ladezustand der Elektronikeinheit 18 vorgesehen ist und insbesondere zumindest ein akustisches Ausgabeelement, beispielhaft einen Lautsprecher, und/oder zumindest ein haptisches Ausgabeelement, beispielhaft einen Vibrationsmotor, aufweist. Der Schaltzustand der Elektronikeinheit 18 gibt insbesondere an, in welcher Schaltstellung sich die Schaltelemente 28, 30, 62 der Elektronikeinheit 18 befinden. Der Ladezustand der Elektronikeinheit 18 gibt insbesondere eine Restkapazität zumindest einer Energieversorgungsquelle der Elektronikeinheit 18 und/oder der Werkzeugmaschine 14, beispielhaft eines Akkumulators, an (hier nicht weiter dargestellt). Das dritte Gehäuseteil 76 weist insbesondere vier Ausnehmungen 98 auf, durch die die Ausgabeelemente 96 durchleuchten können. Die Ausgabeeinheit 50 weist insbesondere zumindest ein Kennzeichnungselement 100 zu einer Kennzeichnung der Ausgabeeinheit 50 auf, das insbesondere an dem dritten Gehäuseteil 76 anordenbar ist.

Bevorzugt umfasst die Werkzeugmaschinenschaltvorrichtung 10 zumindest eine Sekundärbetätigungseinheit, insbesondere die vorgenannte Sekundärbetätigungseinheit 52, wobei die Elektronikeinheit 18 zu einer Ausgabe von dem zumindest einen Signal in Abhängigkeit von einer Betätigung durch die Betätigungseinheit 16 und durch die Sekundärbetätigungseinheit 52 eingerichtet ist. Die folgende Beschreibung gilt zumindest im Wesentlichen analog auch für ein Zusammenwirken der Sekundärbetätigungseinheit 52 mit der weiteren Betätigungseinheit 16'. Die Sekundärbetätigungseinheit 52 ist vorzugsweise zu einer Betätigung von dem zumindest einen zusätzlichen Schaltelement 62 der Elektronikeinheit 18 vorgesehen. Bevorzugt ist die Sekundärbetätigungseinheit 52 verschieden von der Betätigungseinheit 16 ausgebildet. Alternativ ist vorstellbar, dass die Sekundärbetätigungseinheit 52 zumindest im Wesentlichen analog zu der Betätigungseinheit 16 ausgebildet ist. Vorzugsweise weist die Sekundärbetätigungseinheit 52 zumindest ein Sekundärbetätigungselement 102 auf, das insbesondere frei von einer Kopplung mit dem Bedienelement 60 der Werkzeugmaschine 14 ausgebildet ist. Insbesondere ist das Sekundärbetätigungselement 102 unmittelbar von einem Nutzer der Werkzeugmaschinenschaltvorrichtung 10 betätigbar. Insbesondere ist das Sekundärbetätigungselement 102 zu einer unmittelbaren, insbesondere übersetzungsfreien, Betätigung des zusätzlichen Schaltelements 62 vorgesehen. Das Sekundärbetätigungselement 102 kann insbesondere als ein Druckknopf, als ein Schiebeschalter, als ein Drehschalter oder als ein anderes, einem Fachmann als sinnvoll erscheinendes Sekundärbetätigungselement ausgebildet sein. Im vorliegenden Ausführungsbeispiel ist das Sekundärbetätigungselement 102 beispielhaft als ein Druckknopf ausgebildet. Insbesondere ist das Sekundärbetätigungselement 102 zumindest abschnittsweise außerhalb der Gehäuseeinheit 38 angeordnet, insbesondere zu einer Betätigung durch den Benutzer, und zumindest abschnittsweise innerhalb der Gehäuseeinheit 38 angeordnet, insbesondere zu einer Betätigung des zusätzlichen Schaltelements 62. Vorzugsweise weist die Sekundärbetätigungseinheit 52 zumindest ein Sekundärdruck- und/oder -zugelement 104, insbesondere eine Druckfeder, auf, das zu einer federelastischen Lagerung, insbesondere zu einer bistabilen Lagerung, des Sekundärbetätigungselements 102 an der Gehäuseeinheit 38 vorgesehen ist. Insbesondere kann das Sekundärbetätigungselement 102 in zumindest einer Schaltstellung, insbesondere zumindest in der Betätigungsstellung, verrastbar sein. Bevorzugt ist die Elektronikeinheit 18 dazu eingerichtet, in Abhängigkeit von einer Betätigung durch die Betätigungseinheit 16 und einer, insbesondere gleichzeitigen, Betätigung durch die Sekundärbetätigungseinheit 52 zumindest ein Signal, insbesondere zumindest ein Steuersignal zu einer Aktivierung der elektrischen Antriebseinheit 12, an die elektrische Antriebseinheit 12 auszugeben.

Figur 4 zeigt die Elektronikeinheit 18 der Werkzeugmaschinenschaltvorrichtung 10 aus Fig. 1 in einer perspektivischen Darstellung. Gut zu erkennen sind die Schaltelemente 28, 30, 62. Das Schaltelement 28 und das weitere Schaltelement 30 sind insbesondere entlang einer Haupterstreckungsrichtung 106 der Platine 64 betrachtet auf einer gleichen Höhe auf der Platine 64 angeordnet. Das zusätzliche Schaltelement 62 ist entlang der Haupterstreckungsrichtung 106 der Platine 64 betrachtet versetzt zu dem Schaltelement 28 und zu dem weiteren Schaltelement 30 angeordnet. Das Schaltelement 28 und das weitere Schaltelement 30 sind quer zu der Haupterstreckungsrichtung 106 der Platine 64 betrachtet beabstandet voneinander auf der Platine 64 angeordnet. Das zusätzliche Schaltelement 62 ist quer zu der Haupterstreckungsrichtung 106 der Platine 64 betrachtet mittig zwischen dem Schaltelement 28 und dem weiteren Schaltelement 30 angeordnet.

Figur 5 zeigt die Werkzeugmaschinenschaltvorrichtung 10 aus Fig. 1 in einer schematischen Schnittdarstellung. In Figur 5 ist die Betätigungseinheit 16 in einer betätigungsfreien Schaltstellung dargestellt. Die folgende Beschreibung beschränkt sich der Übersichtlichkeit halber auf ein Zusammenwirken der Betätigungseinheit 16 mit der Übersetzungseinheit 20 und dem Schaltelement 28. Die Beschreibung ist zumindest im Wesentlichen analog auch auf ein Zusammenwirken der weiteren Betätigungseinheit 16 mit der weiteren Übersetzungseinheit 20 und dem weiteren Schaltelement 30 übertragbar. Bevorzugt umfasst die Übersetzungseinheit 20 zumindest zwei Druck- und/oder Zugelemente, insbesondere die vorgenannten Druck- und/oder Zugelemente 22, 24, wobei zumindest ein erstes Druck- und/oder Zugelement 22 als eine Zugfeder und zumindest ein zweites Druck- und/oder Zugelement 24 als eine Druckfeder ausgebildet ist. Vorzugsweise ist das erste Druck- und/oder Zugelement 22 unmittelbar mit dem Schieberelement 26 wirkverbunden, insbesondere mechanisch mit dem Schieberelement 26 gekoppelt. Vorzugsweise ist das zweite Druck- und/oder Zugelement 24 unmittelbar mit dem Betätigungselement 34 wirkverbunden, insbesondere mechanisch mit dem Betätigungselement 34 gekoppelt. Bevorzugt sind das erste Druck- und/oder Zugelement 22 und das zweite Druck- und/oder Zugelement 24 derart angeordnet, insbesondere in der Gehäuseeinheit 38, dass die Kraftrichtung 84, entlang derer das erste Druck- und/oder Zugelement 22 die Betätigungseinheit 16, insbesondere das Schieberelement 26, mit einer Kraft, insbesondere mit einer Zugkraft, beaufschlagt und die weitere Kraftrichtung 86, entlang derer das zweite Druck- und/oder Zugelement 24 die Betätigungseinheit 16, insbesondere das Betätigungselement 34, mit einer Kraft, insbesondere mit einer Druckkraft, beaufschlagt, zumindest im Wesentlichen parallel zueinander verlaufen. Vorzugsweise zeigen die Kraftrichtung 84 und die weitere Kraftrichtung 86 entgegen einer Betätigungsrichtung 108, in die die Betätigungseinheit 16 in Abhängigkeit von einer Betätigung, insbesondere über das Bedienelement 60, bewegt wird. Insbesondere verlaufen die Kraftrichtung 84 und die weitere Kraftrichtung 86 zumindest im Wesentlichen antiparallel zu der Betätigungsrichtung 108. Insbesondere ist das zweite Druck- und/oder Zugelement 24 dazu vorgesehen, eine entgegen der Betätigungsrichtung 108 wirkende Druckkraft auf das Betätigungselement 34 auszuüben. Insbesondere ist das erste Druck- und/oder Zugelement 22 dazu vorgesehen, eine entgegen der Betätigungsrichtung 108 wirkende Zugkraft auf das Schieberelement 26 auszuüben. Das erste Druck- und/oder Zugelement 22 ist vorzugsweise an dem Schieberelement 26 und an der weiteren Wandung 94 der Gehäuseeinheit 38 befestigt. Insbesondere ist das erste Druck- und/oder Zugelement 22 dazu vorgesehen, das Schieberelement 26 in Richtung der weiteren Wandung 94 zu ziehen. Das zweite Druck- und/oder Zugelement 24 ist vorzugsweise an dem Schieberelement 26 gelagert. Insbesondere ist das zweite Druck- und/oder Zugelement 24 dazu vorgesehen, das Betätigungselement 34 gegen das Schieberelement 26, insbesondere in Richtung der weiteren Wandung 94, zu drücken. Insbesondere verläuft das Betätigungselement 34 zumindest abschnittsweise innerhalb des zweiten Druck- und/oder Zugelements 24. Insbesondere weist das Betätigungselement 34 zumindest einen Endkopf 110 auf, gegen den das zweite Druck- und/oder Zugelement 24 drücken kann. Vorzugsweise ist über eine Anpassung von Parametern, insbesondere von einer Druckkraft und/oder einer Zugkraft, beispielsweise einer Federstärke, von einer Länge, von einer Anordnung o. dgl., der Druck- und/oder Zugelemente 22, 24 relativ zueinander das Verhältnis zwischen dem Betätigungsweg und dem Schaltweg einstellbar.

Bevorzugt umfasst die Betätigungseinheit 16 zumindest ein mit der Übersetzungseinheit 20 wirkverbundenes Schieberelement, insbesondere das vorgenannte Schieberelement 26, zu einer Betätigung zumindest eines Schaltelements 28, insbesondere eines Mikroschalters, der Elektronikeinheit 18, wobei eine geometrische Ausbildung des Schieberelements 26 den Schaltweg der Betätigungseinheit 16, insbesondere bis zu einem Erreichen eines Schaltpunkts der Elektronikeinheit 18, relativ zu einem maximalen Verstellweg 32 des Schieberelements 26 beeinflusst. Insbesondere ist der maximale Verstellweg 32 des Schieberelements 26 unabhängig von dem Betätigungsweg der Betätigungseinheit 16. Insbesondere weist das Schieberelement 26 denselben maximalen Verstellweg 32 unabhängig von der Werkzeugmaschine 14, mit der die Werkzeugmaschinenschaltvorrichtung 10 verwendet wird, auf. Das Schieberelement 26 ist vorzugsweise dazu vorgesehen, das Schaltelement 28 der Elektronikeinheit 18 zu betätigen. Insbesondere ist das Schieberelement 26 dazu vorgesehen, eine Schaltzunge 112 des Schaltelements 28, insbesondere quer zu der Kraftrichtung 84 und zu der weiteren Kraftrichtung 86, zu bewegen. Vorzugsweise wird durch eine Bewegung der Schaltzunge 112 zumindest ein Kontakt des, insbesondere als Mikroschalter ausgebildeten, Schaltelements 28 geschlossen und/oder ein Widerstandswert des, insbesondere als Potentiometer ausgebildeten, Schaltelements 28 verändert. Vorzugsweise weist das Schieberelement 26 zumindest eine Betätigungsnase 114 auf, die dazu vorgesehen ist, das Schaltelement 28 zu betätigen, insbesondere die Schaltzunge 112 des Schaltelements 28 zu bewegen.

Eine Länge des Schaltwegs, insbesondere bis zum Erreichen des Schaltpunkts, insbesondere relativ zu einer Länge des maximalen Verstellwegs 32 des Schieberelements 26, ist insbesondere abhängig von einer geometrischen Ausbildung des Schieberelements 26, insbesondere der Betätigungsnase 114. Beispielhaft ist denkbar, dass das Schieberelement 26, insbesondere die Betätigungsnase 114, mit einer großen maximalen Erstreckung quer zu der Kraftrichtung 84 und zu der weiteren Kraftrichtung 86 das Schaltelement 28 nach einem kürzeren Schaltweg, insbesondere relativ zu dem maximalen Verstellweg 32 des Schieberelements 26, betätigt als ein anderes Schieberelement, insbesondere eine andere Betätigungsnase, mit einer geringeren maximalen Erstreckung quer zu der Kraftrichtung 84 und zu der weiteren Kraftrichtung 86. Beispielhaft ist denkbar, dass das Schieberelement 26, das die Betätigungsnase 114 entlang der Kraftrichtung 84 und der weiteren Kraftrichtung 86 betrachtet vor einem anderen Schieberelement aufweist, das Schaltelement 28 nach einem kürzeren Schaltweg, insbesondere relativ zu dem maximalen Verstellweg 32 des Schieberelements 26, betätigt.

Bevorzugt umfasst die Betätigungseinheit 16 zumindest ein mit der Übersetzungseinheit 20 wirkverbundenes Betätigungselement, insbesondere das vorgenannte Betätigungselement 34, insbesondere zumindest ein Betätigungskabel, zu einer Betätigung des Schieberelements 26, wobei der Schaltweg der Betätigungseinheit 16, insbesondere bis zum Erreichen des Schaltpunkts der Elektronikeinheit 18, relativ zu einem maximalen Verstellweg 36 des Betätigungselements 34 abhängig ist von einer Ausbildung der Übersetzungseinheit 20. Insbesondere ist der maximale Verstellweg 36 des Betätigungselements 34 abhängig von dem Bedienelement 60, insbesondere von einer Geometrie des Bedienelements 60, der Werkzeugmaschine 14, mit der die Werkzeugmaschinenschaltvorrichtung 10 verwendet wird. Insbesondere kann das Betätigungselement 34 abhängig von unterschiedlichen Werkzeugmaschinen 14, insbesondere von unterschiedlichen Bedienelementen 60, unterschiedliche maximale Verstellwege 36 aufweisen. Vorzugsweise ist der Schaltweg, insbesondere bis zum Erreichen des Schaltpunkts der Elektronikeinheit 18, insbesondere relativ zu dem maximalen Verstellweg 36 des Betätigungselements 34, abhängig von einer Ausbildung, insbesondere von Parametern, des ersten Druck- und/oder Zugelements 22 und des zweiten Druck- und/oder Zugelements 24. Beispielhaft ist denkbar, dass die Übersetzungseinheit 20 mit dem ersten Druck- und/oder Zugelement 22, das eine geringere Federstärke als das zweite Druck- und/oder Zugelement 24 der Übersetzungseinheit 20 aufweist, einen kürzeren Schaltweg, insbesondere relativ zu dem maximalen Verstellweg 36 des Betätigungselements 34, bereitstellt als eine andere Übersetzungseinheit mit einem ersten Druck- und/oder Zugelement, das eine höhere Federstärke als ein zweites Druck- und/oder Zugelement der anderen Übersetzungseinheit aufweist.

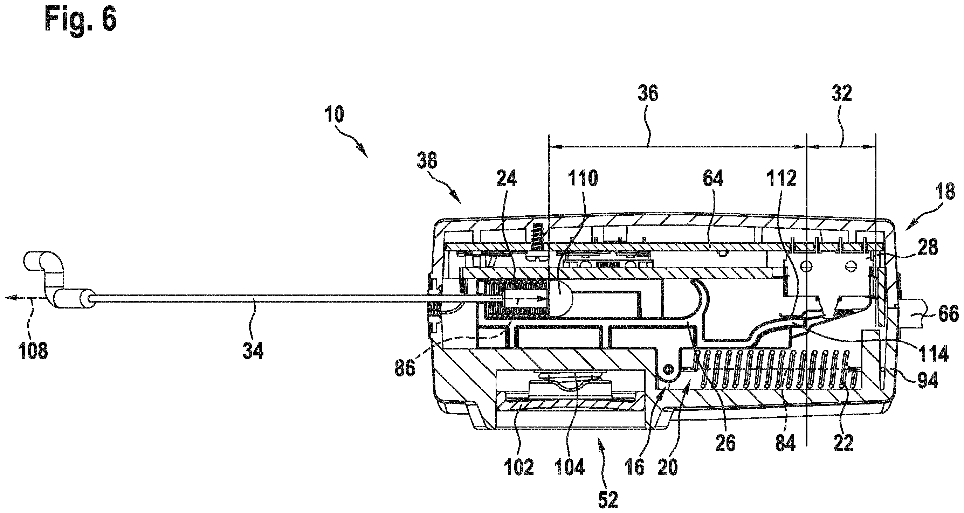

Figur 6 zeigt die Werkzeugmaschinenschaltvorrichtung 10 aus Fig. 1 in einer weiteren schematischen Schnittdarstellung. In Figur 6 ist die Betätigungseinheit 16 in einer betätigten Schaltstellung dargestellt. Das Schieberelement 26 hat insbesondere den maximalen Verstellweg 32 des Schieberelements 26 zurückgelegt und insbesondere das Schaltelement 28 betätigt. Das Betätigungselement 34 hat insbesondere den maximalen Verstellweg 36 des Betätigungselements 34 zurückgelegt.

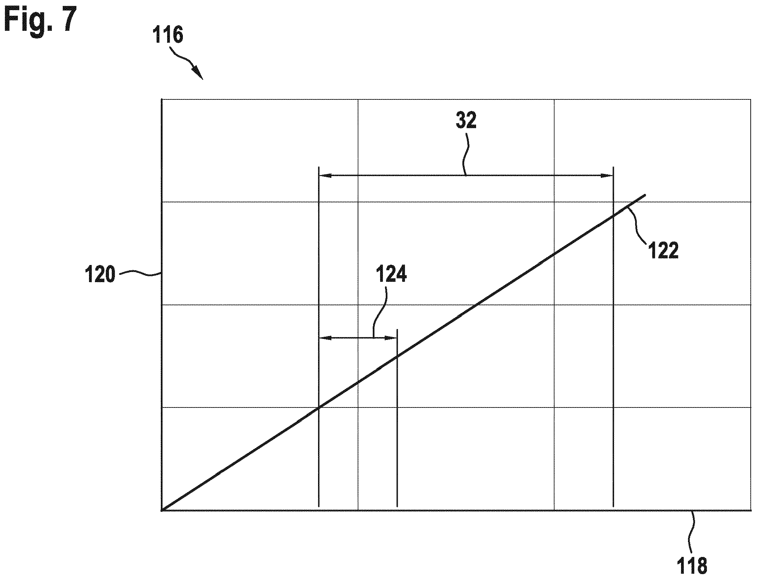

Figur 7 zeigt ein Diagramm 116 des Schaltwegs der Betätigungseinheit 16 der erfindungsgemäßen Werkzeugmaschinenschaltvorrichtung 10 aus Fig. 1 in einer schematischen Darstellung. Das Diagramm 116 umfasst insbesondere eine Abszissenachse 118 und eine Ordinatenachse 120. An der Abszissenachse 118 ist insbesondere eine Wegstrecke aufgetragen. An der Ordinatenachse 120 ist insbesondere eine Federkraft aufgetragen. Die Wegstrecke verhält sich insbesondere proportional zu der Federstärke, wie durch eine Gerade 122 verdeutlicht. In dem Diagramm 116 markiert ist insbesondere der maximale Verstellweg 32 des Schieberelements 26. Bevorzugt sind/ist das Schieberelement 26 und/oder die Übersetzungseinheit 20 derart ausgebildet, dass der Schaltweg der Betätigungseinheit 16, insbesondere bis zum Erreichen des Schaltpunkts der Elektronikeinheit 18, höchstens 30 % des maximalen Verstellwegs 32 des Schieberelements 26 entspricht. 30 % des maximalen Verstellwegs 32 des Schieberelements 26 sind in dem Diagramm 116 insbesondere durch eine Strecke 124 markiert. Insbesondere sind/ist das Schieberelement 26 und/oder die Übersetzungseinheit 20 derart ausgebildet, dass der Schaltweg der Betätigungseinheit 16, insbesondere bis zum Erreichen des Schaltpunkts der Elektronikeinheit 18, höchstens 30 %, bevorzugt höchstens 20 % und besonders bevorzugt höchstens 10 %, des maximalen Verstellwegs 32 des Schieberelements 26 entspricht. Insbesondere sind/ist das Schieberelement 26 und/oder die Übersetzungseinheit 20 derart ausgebildet, dass das Schieberelement 26 spätestens nach einer Verschiebung des Schieberelements 26 um 30 % des maximalen Verstellwegs 32 des Schieberelements 26 das Schaltelement 28 der Elektronikeinheit 18 betätigt.

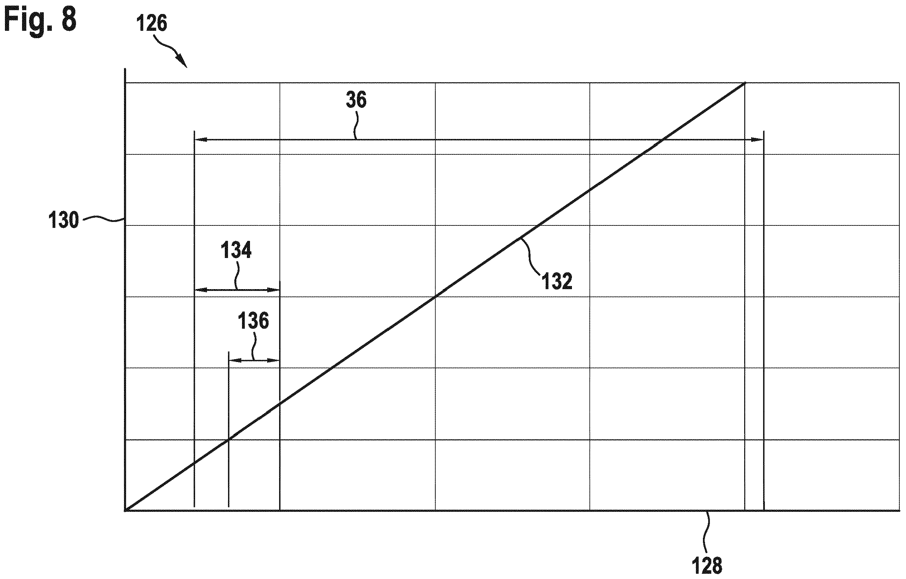

Figur 8 zeigt ein weiteres Diagramm 126 des Schaltwegs aus Fig. 7 in einer schematischen Darstellung. Das weitere Diagramm 126 umfasst insbesondere eine Abszissenachse 128 und eine Ordinatenachse 130. An der Abszissenachse 128 ist insbesondere eine Wegstrecke aufgetragen. An der Ordinatenachse 130 ist insbesondere eine Federkraft aufgetragen. Die Wegstrecke verhält sich insbesondere proportional zu der Federstärke, wie durch eine weitere Gerade 132 verdeutlicht. Das weitere Diagramm 126 entspricht zumindest im Wesentlichen einer herausgezoomten Version des Diagramms 116 aus Figur 7. In dem weiteren Diagramm 126 markiert ist insbesondere der maximale Verstellweg 36 des Betätigungselements 34. Bevorzugt ist die Übersetzungseinheit 20 derart ausgebildet, dass der Schaltweg der Betätigungseinheit 16, insbesondere bis zum Erreichen des Schaltpunkts der Elektronikeinheit 18, höchstens 15 % des maximalen Verstellwegs 36 des Betätigungselements 34 entspricht. 15 % des maximalen Verstellwegs 36 des Betätigungselements 34 sind in dem weiteren Diagramm 126 insbesondere durch eine weitere Strecke 134 markiert. Insbesondere ist die Übersetzungseinheit 20 derart ausgebildet, dass der Schaltweg der Betätigungseinheit 16, insbesondere bis zum Erreichen des Schaltpunkts der Elektronikeinheit 18, höchstens 15 %, bevorzugt höchstens 10 % und besonders bevorzugt höchstens 5 %, des maximalen Verstellwegs 36 des Betätigungselements 34 entspricht. Insbesondere ist die Übersetzungseinheit 20 derart ausgebildet, dass die Betätigungseinheit 16, insbesondere das Schieberelement 26, spätestens nach einer Verschiebung des Betätigungselements 34 um 15 % des maximalen Verstellwegs 36 des Betätigungselements 34 das Schaltelement 28 der Elektronikeinheit 18 betätigt. Ein unter einer Voraussetzung eines Schaltwegs von höchstens 30 % des maximalen Verstellwegs 32 des Schieberelements 26 und höchstens 15 % des maximalen Verstellwegs 36 des Betätigungselements 34 möglicher Schaltweg der Betätigungseinheit 16 ist insbesondere durch eine zusätzliche Strecke 136 markiert.

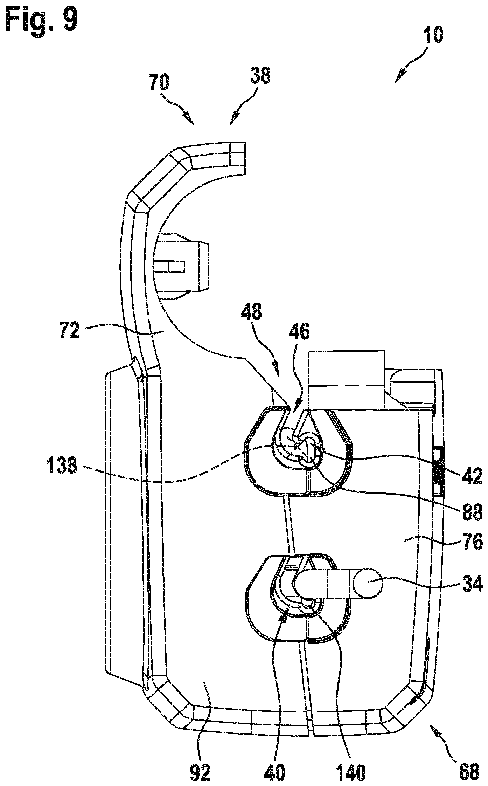

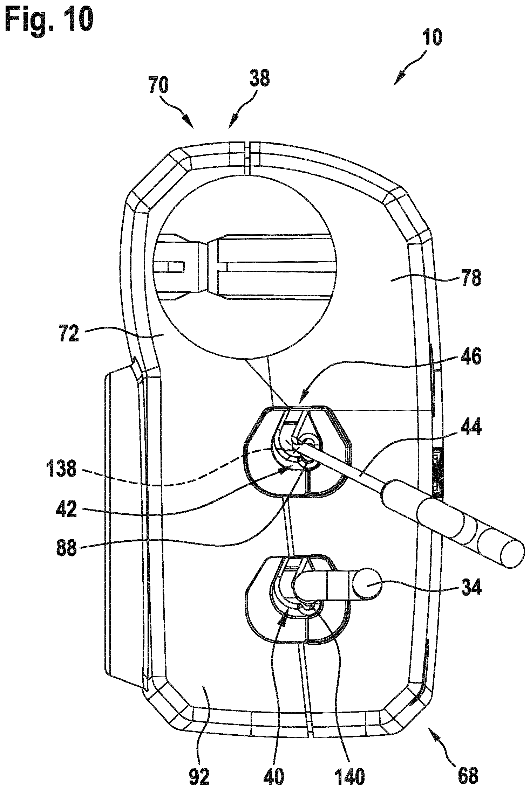

Figur 9 zeigt die Werkzeugmaschinenschaltvorrichtung 10 aus Fig. 1 in einer schematischen Darstellung. Bevorzugt begrenzt die Gehäuseeinheit 38 zumindest eine Öffnung 46 zu dem zumindest einen Aufnahmebereich, insbesondere zu dem weiteren Aufnahmebereich 42, die ein Einführen von dem zumindest einen weiteren Betätigungselement 44 der Betätigungseinheit 16 in den zumindest einen Aufnahmebereich, insbesondere in den weiteren Aufnahmebereich 42, in einem geschlossenen Zustand der Gehäuseeinheit 38 ermöglicht. In Figur 9 ist die Gehäuseeinheit 38 insbesondere in einem geschlossenen Zustand dargestellt. Insbesondere sind das erste Gehäuseteil 72, das zweite Gehäuseteil 74 und das dritte Gehäuseteil 76, die den Aufnahmeabschnitt 68 bilden, aneinander fixiert. Vorzugsweise ist der geschlossene Zustand der Gehäuseeinheit 38 verschieden von einem an der Werkzeugmaschine 14 montierten Zustand der Gehäuseeinheit 38. Insbesondere ist die Öffnung 46 in dem an der Werkzeugmaschine 14 montierten Zustand der Gehäuseeinheit 38 von zumindest einem Fixiergehäuseteil, insbesondere von dem vierten Gehäuseteil 78, der Gehäuseeinheit 38 verschlossen (vgl. Figur 10). Vorzugsweise erstreckt sich die Öffnung 46 quer zu einer Haupterstreckungsrichtung 138 des weiteren Aufnahmebereichs 42 in den weiteren Aufnahmebereich 42 hinein. Vorzugsweise kann die Gehäuseeinheit 38 zumindest ein an, insbesondere in, der Öffnung 46 angeordnetes Umlenkelement aufweisen, an dem das weitere Betätigungselement 44 anliegen kann (hier nicht dargestellt). Alternativ oder zusätzlich ist denkbar, dass die Gehäuseeinheit 38 zumindest ein an, insbesondere in, der Öffnung 46 angeordnetes Dämpfungselement, beispielhaft aus einem Gummi, aufweist, das zu einer Vibrationsdämpfung des durch die Gehäuseeinheit 38 verlaufenden weiteren Betätigungselements 44 vorgesehen ist, insbesondere zu einer Realisierung einer Geräuschvermeidung (hier nicht dargestellt).

Bevorzugt bildet die Gehäuseeinheit 38 zumindest abschnittsweise zumindest einen, insbesondere trichterartigen, Führungsbereich 48 zu einer Zuführung des weiteren Betätigungselements 44 zu der Öffnung 46 aus. Vorzugsweise wird der Führungsbereich 48 von dem ersten Gehäuseteil 72 und von dem dritten Gehäuseteil 76, die den Aufnahmeabschnitt 68 bilden, ausgebildet, insbesondere begrenzt. Insbesondere weisen das erste Gehäuseteil 72 und das dritte Gehäuseteil 76 in einem Bereich um die Öffnung 46 eine Formgebung, die den trichterartigen Führungsbereich 48 vorgibt, auf. Vorzugsweise läuft zumindest eines der Gehäuseteile 72, 76, insbesondere das erste Gehäuseteil 72, in Richtung der Öffnung 46 verengend zu. Insbesondere bilden das erste Gehäuseteil 72 und das dritte Gehäuseteil 76 den Führungsbereich 48, der sich in Richtung der Öffnung 46 trichterartig verjüngt.

Figur 10 zeigt die Werkzeugmaschinenschaltvorrichtung 10 aus Fig. 1 in einer weiteren schematischen Darstellung. In Figur 10 ist das weitere Betätigungselement 44 insbesondere in den weiteren Aufnahmebereich 42 eingesetzt. Insbesondere ist das vierte Gehäuseteil 78 an dem ersten Gehäuseteil 72 fixiert und verschließt insbesondere die Öffnung 46.

## Patentansprüche

1. Werkzeugmaschinenschaltvorrichtung, insbesondere für schiebbare Gartengeräte, zu einer elektronischen Steuerung von zumindest einer elektrischen Antriebseinheit (12) zumindest einer Werkzeugmaschine, mit zumindest einer mechanischen Betätigungseinheit (16; 16'), mit zumindest einer Elektronikeinheit (18), die zu einer Ausgabe von zumindest einem Signal, insbesondere von zumindest einem Steuersignal, in Abhängigkeit von einer Betätigung durch die Betätigungseinheit (16; 16') eingerichtet ist, und mit zumindest einer mit der Betätigungseinheit (16; 16') wirkverbundenen Übersetzungseinheit (20; 20'), die zu einer, insbesondere mechanischen, Einstellung eines Verhältnisses zwischen einem Betätigungsweg der Betätigungseinheit (16; 16') und einem Schaltweg der Betätigungseinheit (16; 16') vorgesehen ist, **dadurch gekennzeichnet, dass** die Übersetzungseinheit (20, 20') zumindest zwei Druck- und/oder Zugelemente (22, 24; 22', 24') umfasst, wobei zumindest ein erstes Druck- und/oder Zugelement (22; 22') als eine Zugfeder und zumindest ein zweites Druck- und/oder Zugelement (24; 24') als eine Druckfeder ausgebildet ist.

2. Werkzeugmaschinenschaltvorrichtung nach Anspruch 1, **dadurch gekennzeichnet, dass** die Übersetzungseinheit (20; 20') dazu vorgesehen ist, einen Schaltweg der Betätigungseinheit (16; 16'), insbesondere bis zu einem Erreichen eines Schaltpunkts der Elektronikeinheit (18), bereitzustellen, der kürzer ist als der Betätigungsweg der Betätigungseinheit (16; 16').

3. Werkzeugmaschinenschaltvorrichtung nach Anspruch 1 oder 2, **dadurch gekennzeichnet, dass** die Übersetzungseinheit (20; 20') zumindest ein Druck- und/oder Zugelement (22, 24; 22', 24') umfasst, das zu einer Einstellung des Schaltwegs der Betätigungseinheit (16; 16') und/oder zu einer Rückführung der Betätigungseinheit (16; 16') in eine betätigungsfreie Ausgangsstellung vorgesehen ist.

4. Werkzeugmaschinenschaltvorrichtung nach einem der vorhergehenden Ansprüche, **dadurch gekennzeichnet, dass** die Betätigungseinheit (16; 16') zumindest ein mit der Übersetzungseinheit (20; 20') wirkverbundenes Schieberelement (26; 26') zu einer Betätigung zumindest eines Schaltelements (28, 30), insbesondere eines Mikroschalters, der Elektronikeinheit (18) umfasst, wobei eine geometrische Ausbildung des Schieberelements (26; 26') den Schaltweg der Betätigungseinheit (16; 16'), insbesondere bis zu einem Erreichen eines Schaltpunkts der Elektronikeinheit (18), relativ zu einem maximalen Verstellweg (32) des Schieberelements (26; 26') beeinflusst.

5. Werkzeugmaschinenschaltvorrichtung nach Anspruch 4, **dadurch gekennzeichnet, dass** das Schieberelement (26; 26') und/oder die Übersetzungseinheit (20; 20') derart ausgebildet sind/ist, dass der Schaltweg der Betätigungseinheit (16; 16'), insbesondere bis zum Erreichen des Schaltpunkts der Elektronikeinheit (18), höchstens 30 % des maximalen Verstellwegs (32) des Schieberelements (26; 26') entspricht.

6. Werkzeugmaschinenschaltvorrichtung nach Anspruch 4 oder 5, **dadurch gekennzeichnet, dass** die Betätigungseinheit (16; 16') zumindest ein mit der Übersetzungseinheit (20; 20') wirkverbundenes Betätigungselement (34; 34'), insbesondere zumindest ein Betätigungskabel, zu einer Betätigung des Schieberelements (26; 26') umfasst, wobei der Schaltweg der Betätigungseinheit (16; 16'), insbesondere bis zum Erreichen des Schaltpunkts der Elektronikeinheit (18), relativ zu einem maximalen Verstellweg (36) des Betätigungselements (34; 34') abhängig ist von einer Ausbildung der Übersetzungseinheit (20; 20').

7. Werkzeugmaschinenschaltvorrichtung nach Anspruch 6, **dadurch gekennzeichnet, dass** die Übersetzungseinheit (20; 20') derart ausgebildet ist, dass der Schaltweg der Betätigungseinheit (16; 16'), insbesondere bis zum Erreichen des Schaltpunkts der Elektronikeinheit (18), höchstens 15 % des maximalen Verstellwegs (36) des Betätigungselements (34; 34') entspricht.

8. Werkzeugmaschinenschaltvorrichtung nach einem der vorhergehenden Ansprüche, **gekennzeichnet durch** zumindest eine Gehäuseeinheit (38), die zumindest einen Aufnahmebereich (40, 42), insbesondere zumindest einen Aufnahmekanal, aufweist, in dem die Übersetzungseinheit (20; 20') und/oder die Betätigungseinheit (16; 16') anordenbar sind/ist.

9. Werkzeugmaschinenschaltvorrichtung nach Anspruch 8, **dadurch gekennzeichnet, dass** der zumindest eine Aufnahmebereich (42) zu einer Durchführung von zumindest einem weiteren Betätigungselement (44) der Betätigungseinheit (16) frei von einer Wirkverbindung mit der Elektronikeinheit (18), und insbesondere übersetzungsfrei, durch die komplette Gehäuseeinheit (38) vorgesehen ist.

10. Werkzeugmaschinenschaltvorrichtung nach Anspruch 9, **dadurch gekennzeichnet, dass** die Gehäuseeinheit (38) zumindest eine Öffnung (46) zu dem zumindest einen Aufnahmebereich (42) begrenzt, die ein Einführen von dem zumindest einen weiteren Betätigungselement (44) der Betätigungseinheit (16) in den zumindest einen Aufnahmebereich (42) in einem geschlossenen Zustand der Gehäuseeinheit (38) ermöglicht.

11. Werkzeugmaschinenschaltvorrichtung nach Anspruch 10, **dadurch gekennzeichnet, dass** die Gehäuseeinheit (38) zumindest abschnittsweise zumindest einen, insbesondere trichterartigen, Führungsbereich (48) zu einer Zuführung des weiteren Betätigungselements (44) zu der Öffnung (46) ausbildet.

12. Werkzeugmaschinenschaltvorrichtung nach einem der vorhergehenden Ansprüche, **gekennzeichnet durch** zumindest eine Ausgabeeinheit (50), die zu einer, insbesondere optischen, akustischen und/oder haptischen, Ausgabe von zumindest einem Schaltzustand und/oder Ladezustand der Elektronikeinheit (18) vorgesehen ist.

13. Werkzeugmaschinenschaltvorrichtung nach einem der vorhergehenden Ansprüche, **gekennzeichnet durch** zumindest eine Sekundärbetätigungseinheit (52), wobei die Elektronikeinheit (18) zu einer Ausgabe von dem zumindest einen Signal in Abhängigkeit von einer Betätigung durch die Betätigungseinheit (16; 16') und durch die Sekundärbetätigungseinheit (52) eingerichtet ist.

14. Werkzeugmaschinenschaltvorrichtung nach Anspruch 8, **dadurch gekennzeichnet, dass** die Gehäuseeinheit (38) an der Werkzeugmaschine befestigbar ist, wobei die Betätigungseinheit (16; 16'), insbesondere zumindest ein Betätigungselement (34; 34') der Betätigungseinheit (16; 16'), mit einem Bedienelement (60) der Werkzeugmaschine koppelbar ist.

15. Werkzeugmaschine, insbesondere schiebbares Gartengerät, mit zumindest einer elektrischen Antriebseinheit (12) und mit zumindest einer Werkzeugmaschinenschaltvorrichtung nach einem der vorhergehenden Ansprüche, **dadurch gekennzeichnet, dass** die Werkzeugmaschinenschaltvorrichtung zu einer elektronischen Steuerung der elektrischen Antriebseinheit (12) eingerichtet ist.

## Claims

1. Machine tool switching device, in particular for sliding garden tools, for electronic control of at least one electric drive unit (12) of at least one machine tool, having at least one mechanical actuation unit (16; 16'), having at least one electronics unit (18) which is configured to output at least one signal, in particular at least one control signal, depending on actuation by the actuation unit (16; 16'), and having at least one translation unit (20; 20') which is operatively connected to the actuation unit (16; 16') and is intended to adjust, in particular mechanically, a ratio between an actuation travel of the actuation unit (16; 16') and a switching travel of the actuation unit (16; 16'), **characterized in that** the translation unit (20, 20') comprises at least two compression and/or tension elements (22, 24; 22', 24'), wherein at least a first compression and/or tension element (22; 22') is in the form of a tension spring and at least a second compression and/or tension element (24; 24') is in the form of a compression spring.

2. Machine tool switching device according to Claim 1, **characterized in that** the translation unit (20; 20') is intended to provide a switching travel of the actuation unit (16; 16') which is shorter than the actuation travel of the actuation unit (16; 16'), in particular up until a switching point of the electronics unit (18) is reached.

3. Machine tool switching device according to Claim 1 or 2, **characterized in that** the translation unit (20; 20') comprises at least one compression and/or tension element (22, 24; 22', 24') which is intended to adjust the switching travel of the actuation unit (16; 16') and/or to return the actuation unit (16; 16') to an actuation-free starting position.

4. Machine tool switching device according to one of the preceding claims, **characterized in that** the actuation unit (16; 16') comprises at least one slide element (26; 26'), which is operatively connected to the translation unit (20; 20'), for actuating at least one switching element (28, 30), in particular a microswitch, of the electronics unit (18), wherein a geometric formation of the slide element (26; 26') affects the switching travel of the actuation unit (16; 16') relative to a maximum adjustment travel (32) of the slide element (26; 26'), in particular up until a switching point of the electronics unit (18) is reached.

5. Machine tool switching device according to Claim 4, **characterized in that** the slide element (26; 26') and/or the translation unit (20; 20') are/is designed in such a way that the switching travel of the actuation unit (16; 16') is equal to at most 30% of the maximum adjustment travel (32) of the slide element (26; 26'), in particular up until the switching point of the electronics unit (18) is reached.

6. Machine tool switching device according to Claim 4 or 5, **characterized in that** the actuation unit (16; 16') comprises at least one actuation element (34; 34'), in particular at least one actuation cable, which is operatively connected to the translation unit (20; 20'), for actuating the slide element (26; 26'), wherein the switching travel of the actuation unit (16; 16') is dependent on a formation of the translation unit (20; 20') relative to a maximum adjustment travel (36) of the actuation element (34; 34'), in particular up until the switching point of the electronics unit (18) is reached.

7. Machine tool switching device according to Claim 6, **characterized in that** the translation unit (20; 20') is designed in such a way that the switching travel of the actuation unit (16; 16') is equal to at most 15% of the maximum adjustment travel (36) of the actuation element (34; 34'), in particular up until the switching point of the electronics unit (18) is reached.

8. Machine tool switching device according to one of the preceding claims, **characterized by** at least one housing unit (38) which has at least one receiving region (40, 42), in particular at least one receiving channel, in which the translation unit (20; 20') and/or the actuation unit (16; 16') are/is able to be arranged.

9. Machine tool switching device according to Claim 8, **characterized in that** the at least one receiving region (42) is intended to feed at least one further actuation element (44) of the actuation unit (16) through the entire housing unit (38) free from an operative connection with the electronics unit (18), and in particular translation-free.

10. Machine tool switching device according to Claim 9, **characterized in that** the housing unit (38) contains at least one opening (46) to the at least one receiving region (42), which opening allows the at least one further actuation element (44) of the actuation unit (16) to be inserted into the at least one receiving region (42) in a closed state of the housing unit (38).

11. Machine tool switching device according to Claim 10, **characterized in that** the housing unit (38) forms, at least in sections, at least one, in particular funnel-like, guide region (48) for guiding the further actuation element (44) to the opening (46).

12. Machine tool switching device according to one of the preceding claims, **characterized by** at least one output unit (50) which is intended to output, in particular visually, audibly and/or haptically, at least one switching state and/or state of charge of the electronics unit (18).

13. Machine tool switching device according to one of the preceding claims, **characterized by** at least one secondary actuation unit (52), wherein the electronics unit (18) is configured to output the at least one signal in dependence on actuation by the actuation unit (16; 16') and by the secondary actuation unit (52).

14. Machine tool switching device according to Claim 8, **characterized in that** the housing unit (38) is able to be fastened to the machine tool, wherein the actuation unit (16; 16'), in particular at least one actuation element (34; 34') of the actuation unit (16; 16'), is able to be coupled to an operating element (60) of the machine tool.

15. Machine tool, in particular a sliding garden tool, having at least one electric drive unit (12) and having at least one machine tool switching device according to one of the preceding claims, **characterized in that** the machine tool switching device is configured to electronically control the electric drive unit (12).

## Revendications

1. Dispositif de commutation de machine-outil, en particulier pour des appareils de jardinage à pousser, pour une commande électronique d'au moins une unité d'entraînement électrique (12) d'au moins une machine-outil, comprenant au moins une unité d'actionnement mécanique (16 ; 16'), au moins une unité électronique (18), qui est conçue pour délivrer au moins un signal, en particulier au moins un signal de commande, en fonction d'un actionnement par l'unité d'actionnement (16 ; 16'), et au moins une unité de transmission (20 ; 20') fonctionnellement reliée à l'unité d'actionnement (16 ; 16'), qui est prévue pour un réglage, en particulier mécanique, d'un rapport entre une course d'actionnement de l'unité d'actionnement (16 ; 16') et une course de commutation de l'unité d'actionnement (16 ; 16'), **caractérisé en ce que** l'unité de transmission (20, 20') comprend au moins deux éléments de pression et/ou de traction (22, 24 ; 22', 24'), au moins un premier élément de pression et/ou de traction (22 ; 22') étant réalisé sous la forme d'un ressort de traction et au moins un second élément de pression et/ou de traction (24 ; 24') étant réalisé sous la forme d'un ressort de compression.

2. Dispositif de commutation de machine-outil selon la revendication 1, **caractérisé en ce que** l'unité de transmission (20 ; 20') est prévue pour fournir une course de commutation de l'unité d'actionnement (16 ; 16'), en particulier jusqu'à ce qu'un point de commutation de l'unité électronique (18) soit atteint, qui est plus courte que la course d'actionnement de l'unité d'actionnement (16 ; 16').

3. Dispositif de commutation de machine-outil selon la revendication 1 ou 2, **caractérisé en ce que** l'unité de transmission (20 ; 20') comprend au moins un élément de pression et/ou de traction (22, 24 ; 22', 24'), qui est prévu pour un réglage de la course de commutation de l'unité d'actionnement (16 ; 16') et/ou pour un retour de l'unité d'actionnement (16 ; 16') à une position initiale sans actionnement.

4. Dispositif de commutation de machine-outil selon l'une quelconque des revendications précédentes, **caractérisé en ce que** l'unité d'actionnement (16 ; 16') comprend au moins un élément coulissant (26 ; 26') fonctionnellement relié à l'unité de transmission (20 ; 20') pour un actionnement d'au moins un élément de commutation (28, 30), en particulier d'un microcommutateur, de l'unité électronique (18), une configuration géométrique de l'élément coulissant (26 ; 26') influençant la course de commutation de l'unité d'actionnement (16 ; 16'), en particulier jusqu'à ce qu'un point de commutation de l'unité électronique (18) soit atteint, par rapport à une course de déplacement maximale (32) de l'élément coulissant (26 ; 26').

5. Dispositif de commutation de machine-outil selon la revendication 4, **caractérisé en ce que** l'élément coulissant (26 ; 26') et/ou l'unité de transmission (20 ; 20') sont/est réalisé(s) de manière à ce que la course de commutation de l'unité d'actionnement (16 ; 16'), en particulier jusqu'à ce que le point de commutation de l'unité électronique (18) soit atteint, corresponde au plus à 30 % de la course de déplacement maximale (32) de l'élément coulissant (26 ; 26').

6. Dispositif de commutation de machine-outil selon la revendication 4 ou 5, **caractérisé en ce que** l'unité d'actionnement (16 ; 16') comprend au moins un élément d'actionnement (34 ; 34') fonctionnellement relié à l'unité de transmission (20 ; 20'), en particulier au moins un câble d'actionnement, pour un actionnement de l'élément coulissant (26 ; 26'), la course de commutation de l'unité d'actionnement (16 ; 16'), en particulier jusqu'à ce que le point de commutation de l'unité électronique (18) soit atteint, par rapport à une course de déplacement maximale (36) de l'élément d'actionnement (34 ; 34'), dépendant d'une configuration de l'unité de transmission (20 ; 20').

7. Dispositif de commutation de machine-outil selon la revendication 6, **caractérisé en ce que** l'unité de transmission (20 ; 20') est réalisée de manière à ce que la course de commutation de l'unité d'actionnement (16 ; 16'), en particulier jusqu'à ce que le point de commutation de l'unité électronique (18) soit atteint, corresponde au plus à 15 % de la course de déplacement maximale (36) de l'élément d'actionnement (34 ; 34').

8. Dispositif de commutation de machine-outil selon l'une quelconque des revendications précédentes, **caractérisé par** au moins une unité de boîtier (38) qui comporte au moins une zone de réception (40, 42), en particulier au moins un canal de réception, dans laquelle l'unité de transmission (20 ; 20') et/ou l'unité d'actionnement (16 ; 16') peuvent/peut être disposée(s).

9. Dispositif de commutation de machine-outil selon la revendication 8, **caractérisé en ce que** ladite au moins une zone de réception (42) est prévue pour une mise en oeuvre d'au moins un autre élément d'actionnement (44) de l'unité d'actionnement (16) sans liaison fonctionnelle avec l'unité électronique (18), et en particulier sans démultiplication, par l'intermédiaire de l'unité de boîtier (38) complète.

10. Dispositif de commutation de machine-outil selon la revendication 9, **caractérisé en ce que** l'unité de boîtier (38) définit au moins une ouverture (46) vers ladite au moins une zone de réception (42), qui permet une insertion dudit au moins un autre élément d'actionnement (44) de l'unité d'actionnement (16) dans ladite au moins une zone de réception (42) dans un état fermé de l'unité de boîtier (38).

11. Dispositif de commutation de machine-outil selon la revendication 10, **caractérisé en ce que** le module de boîtier (38) forme au moins en partie au moins une zone de guidage (48), en particulier en forme d'entonnoir, pour un acheminement de l'autre élément d'actionnement (44) vers l'ouverture (46).

12. Dispositif de commutation de machine-outil selon l'une quelconque des revendications précédentes, **caractérisé par** au moins une unité de sortie (50) qui est prévue pour délivrer, en particulier de manière optique, acoustique et/ou haptique, au moins un état de commutation et/ou un état de charge de l'unité électronique (18).

13. Dispositif de commutation de machine-outil selon l'une quelconque des revendications précédentes, **caractérisé par** au moins une unité d'actionnement secondaire (52), l'unité électronique (18) étant conçue pour délivrer ledit au moins un signal en fonction d'un actionnement par l'unité d'actionnement (16 ; 16') et par l'unité d'actionnement secondaire (52).

14. Dispositif de commutation de machine-outil selon la revendication 8, **caractérisé en ce que** l'unité de boîtier (38) peut être fixée sur la machine-outil, l'unité d'actionnement (16 ; 16'), en particulier au moins un élément d'actionnement (34 ; 34') de l'unité d'actionnement (16 ; 16'), pouvant être couplée à un élément de commande (60) de la machine-outil.

15. Machine-outil, en particulier appareil de jardinage à pousser, comprenant au moins une unité d'entraînement électrique (12) et au moins un dispositif de commutation de machine-outil selon l'une quelconque des revendications précédentes, **caractérisée en ce que** le dispositif de commutation de machine-outil est conçu pour commander électroniquement l'unité d'entraînement électrique (12).
